(19)
Europäisches Patentamt

European Patent Office

Office européen des brevets

(11) **EP 4 528 350 A1**

(12) **EUROPEAN PATENT APPLICATION**
published in accordance with Art. 153(4) EPC

(43) Date of publication:
26.03.2025 Bulletin 2025/13

(21) Application number: 23859091.3

(22) Date of filing: 08.08.2023

(51) International Patent Classification (IPC):
*G02B 13/18* (2006.01)  *G02B 15/163* (2006.01)
*G02B 15/24* (2006.01)

(86) International application number:
**PCT/CN2023/111766**

(87) International publication number:
**WO 2024/046056 (07.03.2024 Gazette 2024/10)**

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.08.2022  CN 202211042870

(71) Applicant: Huawei Technologies Co., Ltd.
Shenzhen, Guangdong 518129 (CN)

(72) Inventors:
• WANG, Heng
  Shenzhen, Guangdong 518129 (CN)
• YE, Haishui
  Shenzhen, Guangdong 518129 (CN)

(74) Representative: Maiwald GmbH
Engineering
Elisenhof
Elisenstrasse 3
80335 München (DE)

(54) **CAMERA MODULE AND ELECTRONIC DEVICE**

(57) This application provides a camera module and an electronic device. The camera module includes a first lens group with a positive focal power, a second lens group with a negative focal power, and an image sensor. The second lens group is located between the first lens group and the image sensor. When a focusing operation from an object at a long-distance first position to an object at a short-distance second position is performed, the second lens group and the image sensor move in a direction away from the first lens group. The camera module can implement wide-object-distance imaging and a large image shooting magnification ratio, a focusing stroke is short, and a focusing speed is fast, which helps implement miniaturization of the camera module. In addition, imaging quality is good.

FIG. 9

EP 4 528 350 A1

## Description

This application claims priority to Chinese Patent Application No. 202211042870.6, filed with the China National Intellectual Property Administration on August 29, 2022 and entitled "CAMERA MODULE AND ELECTRONIC DEVICE", which is incorporated herein by reference in its entirety.

## TECHNICAL FIELD

This application relates to the optical lens field, and more specifically, to a camera module and an electronic device.

## BACKGROUND

With development of electronic device technologies and diversified requirements of consumers, a camera function has become an important feature of an electronic device and a main index for evaluating performance of the electronic device. In addition, the electronic device tends to develop toward a lightening and thinning design. Therefore, the market demand for a miniaturized camera lens with good imaging quality is gradually increased.

During image shooting, people hope that a camera lens can implement wide-object-distance imaging from an infinite-distance object to a short-distance object, and implement a large image shooting magnification ratio. However, when a focusing operation from the infinite-distance object to the short-distance object is performed, a focusing stroke of a camera module may be long, which is not conducive to miniaturization of the camera module.

## SUMMARY

Embodiments of this application provide a camera module and an electronic device. The camera module can implement wide-object-distance imaging, and a focusing stroke is short.

According to a first aspect, a camera module is provided. The camera module includes: a first lens group, where the first lens group has a positive focal power; a second lens group, where the second lens group has a negative focal power; and an image sensor, where the image sensor is configured to convert an optical signal into an electrical signal; the second lens group is located between the first lens group and the image sensor; and when the camera module performs a focusing operation from an object at a first position to an object at a second position, the second lens group and the image sensor move in a direction away from the first lens group.

It should be understood that a distance between the first position and the camera module is long, and a distance between the second position and the camera module is short.

It should be understood that the second lens group and the image sensor may be moved as a whole.

In this embodiment of this application, the second lens group and the image sensor perform the focusing operation together, and the image sensor may also move to perform focusing, that is, the image sensor undertakes a part of a focusing function, thereby reducing a movement amount of the second lens group. Therefore, in comparison with a solution in which only some lenses in the camera module are moved to implement a focusing operation, a focusing stroke required for moving the second lens group and the image sensor to perform focusing is short (that is, a movement amount of moving toward the direction away from the first lens group is short), which helps reduce a size of the camera module. In addition, a focusing speed of the camera module can be increased, thereby improving image shooting experience of a user.

Moreover, based on the foregoing focusing manner, a change of a focal length of the camera module is small. Therefore, imaging quality is good when image shooting from an infinite-distance object to a short-distance object is performed; and a large image shooting magnification ratio can be implemented when image shooting is performed on the short-distance object.

With reference to the first aspect, in a possible implementation, in the direction away from the first lens group, a movement amount of the second lens group is the same as a movement amount of the image sensor.

In this embodiment of this application, the second lens group and the first lens group have a same focusing stroke, that is, a distance between the second lens group and the first lens group is fixed. In this way, only one automatic focusing drive assembly is required to implement the focusing operation, so that the size of the camera module can be reduced, and miniaturization of the camera module can be implemented.

With reference to the first aspect, in a possible implementation, the camera module has a magnification ratio greater than or equal to 0.5 when shooting an object that is located at a closest focusing distance.

In this embodiment of this application, the camera module can implement wide-object-distance imaging from the infinite-distance object to the short-distance object, and can implement the image shooting magnification ratio greater than or equal to 0.5, thereby helping improve the shooting experience of the user.

With reference to the first aspect, in a possible implementation, the first lens group includes a first reflection element and a first lens unit. The first reflection element is located on an image side of the first lens unit, and the first reflection element is configured to reflect an incident light ray to the first lens unit.

In this embodiment of this application, because the first reflection element can implement deflection of the light ray, the first lens group, the second lens group, and the image sensor may not be stacked in a direction perpendicular to an object plane, to help reduce a thickness of the camera module, thereby implementing the miniaturization of the camera module.

With reference to the first aspect, in a possible implementation, the second lens group further includes a second lens unit and a second reflection element, the second reflection element is located on an image side of the second lens unit, and the second reflection element is configured to reflect the incident light ray to the image sensor.

In this embodiment of this application, because the first reflection element and the second reflection element are disposed in the camera module, the image sensor may be disposed in parallel to the object plane. When a size of the image sensor is large, a thickness of an electronic device may not be affected. That is, the size of the image sensor is no longer limited by the thickness of the electronic device, so that a large image sensor may be disposed, thereby helping improve the imaging quality.

With reference to the first aspect, in a possible implementation, the first lens group further includes a third lens unit, and the third lens unit has a positive focal power and is located on an object side of the first reflection element.

In this embodiment of this application, the third lens unit is disposed on the object side of the first reflection element, so that a length of an effective optical path can be increased, thereby reducing the size of the camera module. In addition, because the third lens unit has the positive focal power and has effect of converging light rays, an amount of light entering the camera module can be effectively increased, thereby improving the imaging quality.

With reference to the first aspect, in a possible implementation, the first lens group satisfies F$1 \leq 0.9$Fs, F1 is an effective focal length of the first lens group, and Fs is an effective focal length of the camera module.

In this embodiment of this application, when the first lens group satisfies the foregoing condition, it is conducive to implementing the focusing operation from the infinite-distance object to the short-distance object, and shortening the focusing stroke required by the second lens group and the image sensor.

With reference to the first aspect, in a possible implementation, the second lens group satisfies -Fs$\leq$F2, F2 is an effective focal length of the second lens group, and Fs is the effective focal length of the camera module.

In this embodiment of this application, when the second lens group satisfies the foregoing condition, it is conducive to implementing the focusing operation from the infinite-distance object to the short-distance object, and shortening the focusing stroke required by the second lens group and the image sensor.

With reference to the first aspect, in a possible implementation, the effective focal length of the camera module is greater than or equal to 10 mm, and a field of view angle of the camera module is less than or equal to 50°.

It should be understood that in the foregoing case, the camera module is a long-focus lens.

In this embodiment of this application, when the effective focal length of the camera module is long and the field of view angle is small, a large image shooting magnification ratio is more easily implemented in a short stroke, and the imaging quality is good.

With reference to the first aspect, in a possible implementation, the first lens group and/or the second lens group include/includes at least one lens whose dispersion coefficient is less than or equal to 40.

In this embodiment of this application, a lens with a high dispersion coefficient is disposed in the first lens group and/or the second lens group, so that large residual chromatic aberration generated during image shooting can be reduced, and the imaging quality can be improved.

With reference to the first aspect, in a possible implementation, an aperture of the camera module is less than or equal to 2.2.

In this embodiment of this application, a large aperture can implement a large amount of entering light, thereby improving the imaging quality.

With reference to the first aspect, in a possible implementation, the second lens group further includes an infrared filter, and the infrared filter is located on an object side of the image sensor. In this embodiment of this application, the infrared filter may eliminate an unnecessary light ray projected onto the image sensor, and prevent the image sensor from generating false colors or ripples, to effectively improve a resolution and color reproduction of the image sensor.

With reference to the first aspect, in a possible implementation, the camera module further includes an automatic focusing drive assembly, and the automatic focusing drive assembly is configured to drive the second lens group and the image sensor to move in the direction away from the first lens group or in a direction close to the first lens group.

With reference to the first aspect, in a possible implementation, the movement amount of the second lens group and the image sensor is less than or equal to 8 mm.

In this embodiment of this application, the movement amount of the second lens group and the image sensor is less than or equal to 8 mm, so that a large image shooting ratio can be implemented, thereby helping reduce the size of the camera module.

According to a second aspect, an electronic device is provided. The electronic device includes a processor and the camera module according to any one of the possible implementations of the first aspect, and the camera module is configured to obtain image data and input the image data into the processor, so that the processor processes the image data.

## BRIEF DESCRIPTION OF DRAWINGS

FIG. 1 is a diagram of a structure of an electronic device according to an embodiment of this application;
FIG. 2 is an exploded view of a camera module according to an embodiment of this application;
FIG. 3 is a diagram of a structure of a camera module according to an embodiment of this application;
FIG. 4 is a diagram of various aberration obtained when a camera module shoots an infinite-distance object according to an embodiment of this application;
FIG. 5 is a diagram of various aberration obtained when a camera module shoots a short-distance object according to an embodiment of this application;
FIG. 6 is a diagram of a structure of a camera module according to an embodiment of this application;
FIG. 7 is a diagram of various aberration obtained when a camera module shoots an infinite-distance object according to an embodiment of this application;
FIG. 8 is a diagram of various aberration obtained when a camera module shoots a short-distance object according to an embodiment of this application;
FIG. 9 is a diagram of a structure of a camera module according to an embodiment of this application;
FIG. 10 is a diagram of various aberration obtained when a camera module shoots an infinite-distance object according to an embodiment of this application;
FIG. 11 is a diagram of various aberration obtained when a camera module shoots a short-distance object according to an embodiment of this application;
FIG. 12 is a diagram of a structure of a camera module according to an embodiment of this application;
FIG. 13 is a diagram of various aberration obtained when a camera module shoots an infinite-distance object according to an embodiment of this application; and
FIG. 14 is a diagram of various aberration obtained when a camera module shoots a short-distance object according to an embodiment of this application.

## DESCRIPTION OF EMBODIMENTS

The following describes technical solutions of embodiments in this application with reference to accompanying drawings.

For ease of understanding, the following first explains and describes technical terms in this application.

Focal length (focal length): The focal length is also referred to as a focal length, is a measurement method for measuring convergence or divergence of light in an optical system, and is a vertical distance that is from an optical center of a lens or a lens group to a focal plane and that is obtained when an infinite-distance scene forms a clear image on the focal plane by using the lens or the lens group. From a practical perspective, the focal length may be understood as a distance from a center of a lens to a film plane. For a fixed-focus lens, a position of an optical center of the fixed-focus lens is fixed. For a zoom lens, a change of an optical center of the lens causes a change of a focal length of the lens.

Effective focal length (effective focal length, EFL): The effective focal length is a distance from a lens center to a focus.

Aperture: The aperture is an apparatus configured to control an amount of light passing through a lens and entering a photosensitive surface in a body of a camera, and is usually inside the lens. A size of the aperture is indicated by an f-number.

F-number: The f-number is a relative value (a reciprocal of a relative aperture) obtained by dividing a focal length of a lens by an aperture diameter of the lens. A smaller f-number indicates a larger amount of entering light within a same unit time. A larger f-number indicates a smaller depth of field. In this way, background content in photographing is blurred, which is similar to effect of a long-focus lens.

Positive refractive power: The positive refractive power may also be referred to as a positive dioptric power, and means that a lens element has a positive focal length and has effect of converging light rays.

Negative refractive power: The negative refractive power may also be referred to as a negative dioptric power, and means that a lens element has a negative focal length and has effect of diverging light rays.

Total track length (total track length, TTL): The total track length is a total length from a head of a lens tube to an imaging surface, and is a main factor that forms a camera height.

Dispersion coefficient: The dispersion coefficient, also referred to as an Abbe number, is a difference ratio of refractive indexes of an optical material at different wavelengths and indicates a dispersion degree of the material.

Field of view (field of view, FOV) angle: In an optical instrument, an included angle, with a lens of the optical instrument as a vertex, including two edges of a maximum range within which an object image of a measured target is visible through the lens is referred to as the field of view angle. A size of the field of view angle determines a range of vision of the optical instrument. A larger field of view angle indicates broader vision and a smaller optical ratio.

Optical axis: The optical axis is a light ray that passes vertically through an ideal lens center. When light rays parallel to the optical axis are transmitted to a convex lens, an ideal convex lens converges all of the light rays at one point behind the lens. The point at which all the light rays are converged is a focus.

Object space: With a lens as a boundary, space in which a shot object is located is the object space.

Image space: With a lens as a boundary, space in which an image formed behind a lens after light emitted by a shot object passes through the lens is located is the image space.

With a lens as a boundary, a side on which a shot object is located is an object side, and a surface that is on the lens and that is close to the object side may be referred to as an object-side surface. With the lens as a boundary, a side on which an image of the shot object is located is an image side, and the surface that is on the lens and that is close to the image side may be referred to as an image-side surface.

Focal power (focal power): The focal power is equal to a difference between convergence of an image light beam and convergence of an object light beam, and indicates a capability of an optical system in refracting light beams. For a lens or a lens group with a positive focal power, the lens or lens group has a positive focal length, and has effect of converging light beams. For a lens or a lens group with a negative focal power, the lens or lens group has a negative focal length, and has effect of diverging light beams. A diaphragm is an edge, a specially arranged barrier with a hole, or a frame that is of an optical element in an optical assembly and that is used to limit a size of an imaging light beam or an imaging space unit.

Aperture diaphragm: The aperture diaphragm is a diaphragm that limits a maximum inclination angle of a marginal light ray in an on-axis point imaging light beam, namely, a diaphragm with a smallest incident aperture angle.

Nearest focus distance: Each lens has a minimum shooting distance. This distance is referred to as the nearest focus distance. If a distance between an object and the lens is less than this distance, the object cannot be focused.

Object plane: An object is simplified into a point (object distance point) on an optical axis. The object plane is a plane passing through the point and perpendicular to the optical axis.

Chromatic aberration (chromatic aberration): The chromatic aberration is also referred to as chromatism, and is a serious defect of lens imaging. Chromatic aberration may be understood as aberration caused by different refractive indexes of various colored light. A wavelength range of visible light is about 400 nanometers to 700 nanometers. Light of different wavelengths has different colors, and also has different refractive indexes when passing through a lens. Therefore, a point in object space may form a color spot in image space. The chromatic aberration usually includes position chromatic aberration (also referred to as axial chromatic aberration) and magnification chromatic aberration (also referred to as vertical axis chromatic aberration). The position chromatic aberration means that when an object in the object space is observed at any position, a color spot or a halo ring is formed in the image space, and consequently, an image is blurred. The magnification chromatic aberration means that there is a color edge in an image.

Axial chromatic aberration: The axial chromatic aberration is also referred to as longitudinal chromatic aberration, position chromatic aberration, or axial aberration. After passing through a lens, a light beam of light parallel to an optical axis is converged at different positions. This aberration is referred to as the positional chromatic aberration or the axial chromatic aberration. Because the lens images light of different wavelengths at different positions, focal planes of images of different colored light cannot coincide during final imaging, and polychromatic light disperses to form dispersion.

Lateral chromatic aberration: The lateral chromatic aberration is also referred to as ratio chromatic aberration or vertical axis chromatic aberration. A difference in magnification ratios of an optical system for different colored-light is referred to as the ratio chromatic aberration. A wavelength causes a change of a magnification ratio of the optical system, and a size of an image changes accordingly.

ImgH (Image Height): ImgH indicates a half of a diagonal length of an effective pixel area on a photosensitive chip, namely, an image height of an imaging plane.

Astigmatism (astigmatism): Because an object point is not on an optical axis of an optical system, a light beam emitted by the object point is at an inclination angle with the optical axis. After the light beam is refracted by a lens, convergence points of narrow meridian light beams and narrow sagittal light beams are not a same point. That is, the light beam cannot be focused at one point, and imaging is unclear, resulting in astigmatism. The narrow meridian light beam and the narrow sagittal light beam are names of light beams in two vertical planes in a rotationally symmetrical optical system.

Distortion (distortion): The distortion, also referred to as anamorphose, is a degree at which an image formed by an optical system for an object is distorted relative to the object. The distortion is caused by impact of diaphragm spherical aberration. A height of a point at which a chief light ray of a different field of view intersects a Gaussian image plane after the chief light ray passes through the optical system is not equal to an ideal image height, and a difference between two heights is the distortion. Therefore, the distortion only changes an imaging position that is of an off-axis object point and that is on an ideal plane, so that a shape of the image is distorted, but a definition of the image is not affected.

Optical distortion (optical distortion): The optical distortion is a degree of deformation obtained through calculation in an optical theory.

A meridian surface is a plane including a chief light ray emitted by an object point outside a main axis of an optical system and the main axis of the optical system. Light rays located in the meridian surface are collectively referred to as meridian light beams. A point formed by the meridian light beam is referred to as a meridian image point. An image plane on which the meridian image point is located is referred to as a meridian image plane. A sagittal surface is a plane that passes through the chief light ray emitted by the object point located outside the main axis of an optical system and that is perpendicular to the meridian surface. Light rays located in the sagittal surface are collectively referred to as sagittal light beams. A point formed by the sagittal light beam is referred to as a sagittal image point. An image plane on which the sagittal image point is located is referred to as a sagittal image plane. Because the light emitting object point is not on the optical axis of the optical system, and the light beam emitted by the light emitting object point is at an inclination angle with the optical axis, after the light beam is refracted by a lens, the meridian light beams and the sagittal light beams of the light beam cannot converge at a same point. Consequently, imaging is unclear. The phenomenon is referred to as astigmatism.

Diffraction limit (diffraction limit): The diffraction limit means that when an ideal object point is imaged by an optical system, an ideal image point cannot be obtained due to the diffraction limit, but a Fraunhofer diffraction image is obtained. Because an aperture of an ordinary optical system is circular, the Fraunhofer diffraction image is an Airy disc. In this way, an image of each object point is a diffuse spot, and it is difficult to distinguish between two diffuse spots when the two diffuse spots are close. This limits a resolution of the system. A larger spot indicates a lower resolution.

Curvature of field (curvature of field): The curvature of field is used for indicating a difference that is in an optical axis direction and that is between a position of a clearest image point obtained after a non-central field of view light beam passes through a long-focus lens group and a position of a clearest image point in a central field of view. When a lens has curvature of field, an intersection of a whole light beam does not coincide with an ideal image point. Although a clear image point can be obtained at each specific point, a whole image plane is a curved surface.

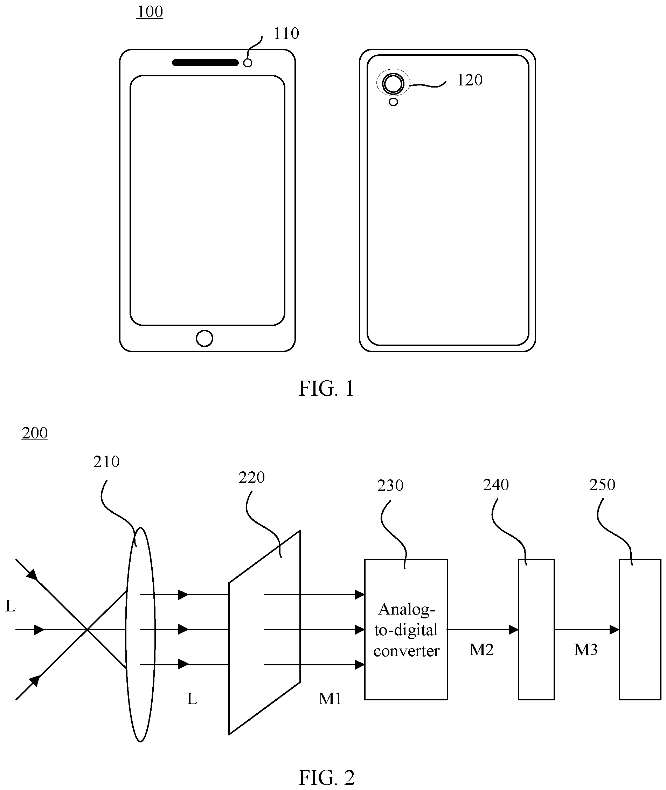

FIG. 1 is a diagram of a structure of an electronic device. As shown in FIG. 1, an electronic device 100 may include a housing, a display, and at least one camera module. Camera modules may be at different positions of a terminal device. It should be understood that the camera module may be an integrated camera module built in the terminal device or a mechanical pop-up camera module that may pop up when the terminal device performs image shooting. For example, the camera module may be mounted in the housing, the display, or the like, or may be connected, in a wireless or wired manner, to a terminal device that has a peripheral camera module. This is not limited in this application. The display is mounted on the housing.

It should be understood that another element, for example, an earpiece, a button, or a sensor may be further disposed in the electronic device 100 shown in FIG. 1. In this embodiment of this application, the electronic device on which the camera module is mounted is merely used as an example, but an element mounted on the electronic device 100 is not limited thereto.

As shown in FIG. 1, a camera module 110 and/or a camera module 120 are/is mounted on the electronic device 100.

The electronic device 100 may be an electronic device with a camera or photographing function, for example, a mobile phone, a smartphone, a tablet computer, a laptop computer, a video camera, a video recorder, a camera, or another form of device with a photographing or camera function. For ease of understanding, an example in which the electronic device 100 is a mobile phone is used for description in this embodiment of this application.

When the electronic device 100 is the mobile phone, camera modules (camera compact modules, CCMs) may be disposed on both a front surface and a rear surface of the electronic device 100, or a camera module may be disposed only on a front surface or a rear surface. A left figure in FIG. 1 is the front surface of the mobile phone, and the camera module 110 is mounted on an upper part of the front surface of the mobile phone, and may be configured to take a selfie, or may be used by a photographer to shoot another object. A right figure in FIG. 1 is the rear surface of the mobile phone, and the camera module 120 is mounted on an upper left part of the rear surface of the mobile phone, and may be configured to shoot a surrounding scene, or may be configured to take a selfie.

It should be understood that mounting positions of the camera module 110 and the camera module 120 are merely examples. In some other embodiments, the camera module 110 and the camera module 120 may alternatively be mounted at other positions on the mobile phone. For example, the camera module 110 may be mounted on a left side of the earpiece or in a middle position of the upper part of the mobile phone, and the camera module 120 may be mounted in a middle of an upper part or an upper right corner of the rear surface of the mobile phone, or the camera module 110 or the camera module 120 may not be disposed on a body of the mobile phone, but may be disposed on a component movable or rotatable relative to the mobile phone. For example, the component may extend, retract, rotate, or the like from the body of the mobile phone. A mounting position of the camera module is not limited in this application.

It should be further understood that a quantity of mounted camera modules 110 and a quantity of mounted camera modules 120 are not limited to one, and may alternatively be two or more. For example, two camera modules 120 may be mounted on the rear surface of the electronic device 100. A quantity of mounted camera modules is not limited in this embodiment of this application.

The camera module 110 and the camera module 120 may be configured to shoot an external video or a photo, and may be configured to shoot scenes at different distances. For example, the camera module may be configured to shoot a distant scene, may be configured to shoot a close scene, or may be configured to shoot a micro-distance scene. The camera module 110 and the camera module 120 may also be configured to take a selfie. The camera module 120 located on the rear surface of the mobile phone shown in the figure may be further configured to be a front-facing camera or the like. This is not limited in this embodiment of this application.

The camera module 110 and the camera module 120 may be periscope camera modules which may include a reflection element. The reflection element plays an important role in a periscope image shooting optics system, and mainly implements deflection of an optical path (an optical axis). This type of periscope system adapts to horizontal space of a portable terminal more effectively, and reduces dependence on longitudinal space (a thickness direction).

It should be understood that the camera module 110 and the camera module 120 may alternatively not include a reflection element.

FIG. 2 is an exploded view of a camera module 200. The camera module 200 may be the camera module 110 or the camera module 120 shown in FIG. 1. The following describes a structure of the camera module with reference to FIG. 2.

The camera module 200 may include an optical lens (lens) 210, an image sensor (sensor) 220, an analog-to-digital converter (which may also be referred to as an A/D converter) 230, a graphics processing unit 240, a memory 250, and the like.

For example, the electronic device 100 is a mobile phone, and a working principle of the camera module 200 may be as follows: By using the optical lens (lens) 210, a light ray L reflected by a shot scene generates an optical image, and the optical image is projected onto a surface of the image sensor 220. The image sensor 220 may convert an optical image into an electrical signal, namely, an analog image signal M1, and the analog image signal M1 may be converted into a digital image signal M2 by using the analog-to-digital converter A/D 230. The digital image signal M2 may be converted into a compressed image signal M3 through processing performed by the graphics processing unit 240 (for example, a digital signal processing (digital signal processing, DSP) chip). The compressed image signal M3 may be stored in the memory 250, and finally displayed on the display.

The optical lens 210 is a key component that affects imaging quality and imaging effect. The optical crystal 210 performs imaging mainly by using a lens refraction principle, that is, light rays emitted from a scene may pass through the lens and be converged on a focal plane, to form a clear image of the scene. Then, the image on the focal plane is recorded by using a photosensitive material or a photosensitive device, so that a shape of the scene can be recorded. The lens may be a whole obtained by combining a plurality of lenses (lens elements). Materials of the lenses may be resin (resin), plastic (plastic), or glass (glass). The lenses include a spherical lens element and an aspheric lens element. The lens may be a fixed-focus lens, or a zoom lens, or may be a standard lens, a short-focus lens, or a long-focus lens.

The image sensor 220 is a semiconductor chip whose surface includes hundreds of thousands to millions of photodiodes. The image sensor 220 generates electric charges when the diodes are irradiated by light rays. An analog-to-digital converter chip may convert an electrical signal into a digital signal. The image sensor 220 may be a charge-coupled device (charge-coupled device, CCD), or may be a complementary metal-oxide semiconductor (complementary metal-oxide semiconductor, CMOS) component. The charge-coupled device image sensor CCD is made of a high-photosensitivity semiconductor material. There are many photosensitive units on the CCD, and the CCD is usually in a unit of megapixels. When a surface of the CCD is irradiated by a light ray, each photosensitive unit feeds back an electric charge value. Signals generated by all of the photosensitive units form a complete picture. A complementary metal-oxide semiconductor CMOS is mainly a semiconductor made of two elements, namely, silicon and germanium, so that an N-type (negatively charged) semiconductor and a P-type (positively charged) semiconductor coexist on the CMOS. A current generated by two types of complementary effect may be recorded by the processing chip, and an image is formed.

A function of the graphics processing unit 240 is to perform optimization processing on a digital image signal through a series of complex mathematical algorithm operations and finally transmit a processed signal to the display. The graphics processing unit 240 may be an image processing chip or a digital signal processing (DSP) chip. A function of the graphics processing unit 240 is to quickly transfer, to a central processing unit in a timely manner, data obtained by a photosensitive chip, and refresh the photosensitive chip.

It should be understood that the graphics processing unit 240 may be one of a plurality of processors included in the electronic device. Alternatively, the graphics processing unit 240 may be integrated into a processor of the electronic device.

The camera module 200 may further include some or all of elements (not shown in the figure) such as an automatic focusing drive assembly, an infrared-cut filter (infrared-cut filter, IRCF), a circuit board, a connector, and a peripheral electronic element. The infrared-cut filter may eliminate an unnecessary light ray projected onto the image sensor 220, and prevent the image sensor 220 from generating false colors or ripples, to improve an effective resolution and color reproduction of the image sensor 220. The automatic focusing drive assembly may include a voice coil motor, a drive integrated circuit, and the like, and is configured to perform automatic focusing or optical image stabilization on the lens. The circuit board may be a flexible circuit (flexible printed circuit, FPC) board or a printed circuit board (printed circuit board, PCB), and is configured to transmit an electrical signal. The FPC may be a single-sided flexible board, a double-sided flexible board, a multi-layer flexible board, a rigid flexible board, a flexible circuit board of a hybrid structure, or the like. Another element included in the camera module 200 are not described in detail herein.

It should be understood that the "lens" in this embodiment of this application may be understood as an entire lens, and may include one or more lenses. The "lens" or the "lens element" may be understood as a lens in a lens structure or a lens or a lens element configured to form a lens.

The following describes a structure of a camera module according to an embodiment of this application by using an example in which the camera module 200 includes the optical lens 210 and the image sensor 220.

The optical lens 210 may include a first lens group and a second lens group. The first lens group has a positive focal power. The first lens group may include a plurality of lenses, and is configured to receive and converge incident light rays. The second lens group has a negative focal power, and may include a plurality of lenses. The second lens group is disposed on an image side of the first lens group, and the second lens group is configured to image the incident light ray on the image sensor.

It may be understood that the incident light ray of a shot object sequentially passes through the first lens group and the second lens group, and is finally imaged on the image sensor. That is, the first lens group, the second lens group, and the image sensor are sequentially arranged based on an optical path of the incident light ray, the second lens group is located between the first lens group and the image sensor, and the second lens group is closer to the image sensor than the first lens group.

In some embodiments, the first lens group may include a first reflection element and a first lens unit, and the second lens group may include a second lens unit. The first reflection element may be configured to receive the incident light ray and reflect the incident light ray to the first lens unit. The first lens unit may include a plurality of lenses, the first lens unit has a positive focal power, and the first lens unit may converge the incident light rays, and transmit a converged incident light ray to the second lens unit of the second lens group. The second lens unit is located on an image side of the first lens unit. The second lens unit may include a plurality of lenses and have a negative focal power. The second lens unit is configured to transmit, to the image sensor, the incident light ray converged by the first lens unit.

In this embodiment of this application, because the first reflection element can implement deflection of the incident light ray, the first lens group, the second lens group, and the image sensor may not be stacked in a direction perpendicular to an object plane, to help reduce a thickness of the camera module, thereby implementing miniaturization of the camera module.

In some embodiments, the first lens group may further include a third lens unit. The third lens unit is disposed on an object side of the first reflection element. The third lens unit has a positive focal power, and the third lens unit is configured to receive and converge incident light rays. The incident light rays are converged by the third lens unit and then reflected at the first reflection element, and then are imaged on the image sensor through the first lens unit and the second lens group.

In this embodiment of this application, the third lens unit is disposed on the object side of the first reflection element, so that a length of an effective optical path can be increased, thereby reducing a size of the camera module. In addition, because the third lens unit may converge the incident light rays, an amount of light entering the camera module can be effectively increased, thereby improving imaging quality. In some embodiments, the second lens group may further include a second reflection element. The second reflection element is located on an image side of the second lens unit, and the second reflection element is configured to reflect the incident light ray to transmit the incident light ray to the image sensor. That is, the incident light ray is transmitted to the image sensor sequentially through the first lens group, the second lens unit, and the second reflection element.

Because the first reflection element and the second reflection element are disposed in the camera module, the image sensor may be disposed in parallel to the object plane. When a size of the image sensor is large, a thickness of the electronic device may not be affected. That is, the size of the image sensor is no longer limited by the thickness of the electronic device, so that a large image sensor may be disposed, thereby helping improve the imaging quality.

It should be noted that, in this embodiment of this application, for a lens, an object side may be understood as a side of a light entrance surface of the lens, and an image side may be understood as a side of a light exit surface of the lens.

In this embodiment of this application, when a focusing operation from an infinite-distance object to a short-distance object is performed, the first lens group remains stationary, and the second lens group and the image sensor move together in a direction away from the first lens group, to implement a large image shooting magnification ratio. That is, when the focusing operation from the infinite-distance object to the short-distance object is performed, a spacing between the first lens group and the second lens group gradually increases. Because the second lens group may implement the focusing operation, the second lens group may also be referred to as a focusing lens group.

It should be noted that, when the focusing operation from the infinite-distance object to the short-distance object is performed, distances between lenses or optical elements in the first lens group and the second lens group may remain unchanged, and a distance between the second lens group and the image sensor may also remain unchanged.

It should be noted that, if the camera module performs a focusing operation from an object at a long-distance first position to an object at a short-distance second position, the second lens group and the image sensor also move in the direction away from the first lens group. If the camera module performs a focusing operation from an object at a short-distance second position to an object at a long-distance first position, the second lens group and the image sensor also move in a direction close to the first lens group. In this embodiment of this application, the second lens group and the image sensor perform the focusing operation together, and the image sensor may also move to perform focusing, that is, the image sensor undertakes a part of a focusing function, thereby reducing a movement amount of the second lens group. Therefore, in comparison with a solution in which only some lenses in the camera module are moved to implement a focusing operation, a focusing stroke (namely, a movement amount of moving toward the direction away from the first lens group) required by the second lens group and the image sensor as a whole is short, which helps reduce the size of the camera module. In addition, a focusing speed of the camera module can be increased, thereby improving image shooting experience of a user.

Moreover, based on the foregoing focusing manner, a change of a focal length of the camera module is small. Therefore, imaging quality is good when image shooting from the infinite-distance object to the short-distance object is performed; and a large image shooting magnification ratio can be implemented when image shooting is performed on the short-distance object.

In addition, both the second lens group and the image sensor are located inside the camera module, and the lens does not need to be pushed forward to extend when a focusing operation is performed, which helps improve sealing performance of the camera module, thereby preventing dust and shielding light.

In some embodiments, the first lens group satisfies F1≤0.9Fs, F1 is an effective focal length of the first lens group, and Fs is an effective focal length of the camera module.

In this embodiment of this application, when the first lens group satisfies the foregoing condition, it is conducive to implementing the focusing operation from the infinite-distance object to the short-distance object, and shortening the focusing stroke required by the second lens group and the image sensor.

In some embodiments, the second lens group satisfies -Fs≤F2, F2 is an effective focal length of the second lens group, and Fs is the effective focal length of the camera module.

In this embodiment of this application, when the second lens group satisfies the foregoing condition, it is conducive to implementing the focusing operation from the infinite-distance object to the short-distance object, and shortening the focusing stroke required by the second lens group and the image sensor.

In some embodiments, the first lens group and/or the second lens group include/includes at least one lens whose dispersion coefficient is less than or equal to 40, to ensure that large residual chromatic aberration is not generated and improve the imaging quality.

In this embodiment of this application, an f-number of the camera module is less than or equal to 2.2, the amount of light entering the camera module is large, and the imaging quality is good.

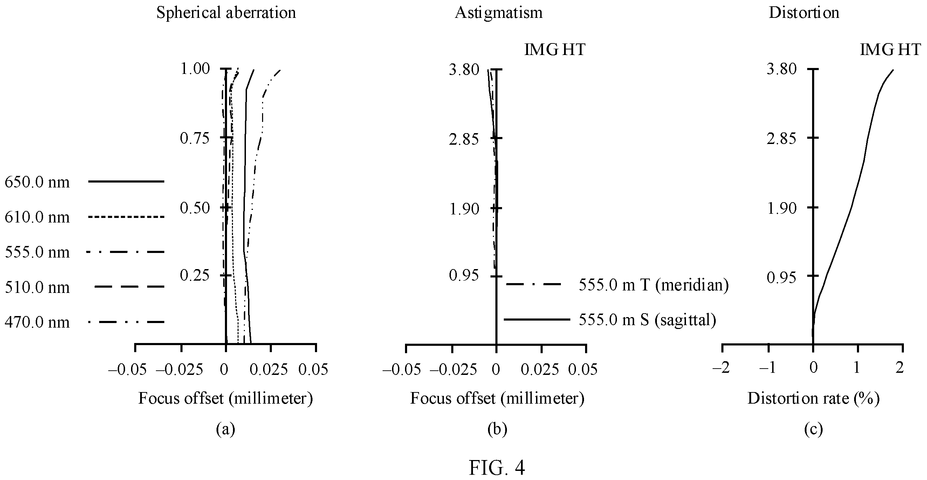

The following describes some specific but non-limitative examples of embodiments of this application in more detail with reference to FIG. 4 to FIG. 14.

Example 1

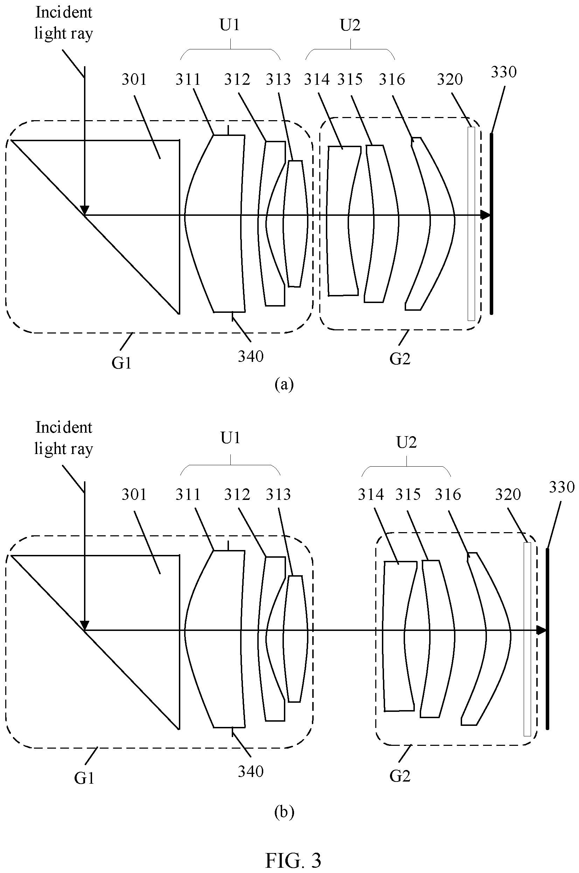

FIG. 3 is a diagram of a structure of a camera module 300 in Example 1. The camera module 300 in this embodiment of this application may be a diagram of a structure of the camera optical lens 210 and the image sensor 220 in the camera module 200 in FIG. 2.

(a) in FIG. 3 is a diagram of a structure of the camera module 300 existing when a shot object is at an infinite distance.
(b) in FIG. 3 is a diagram of a structure of the camera module 300 existing when a shot object is 27 mm away from the camera module and an image shooting magnification ratio is 0.6.

The camera module 300 may include a first lens group G1, a second lens group G2, and an image sensor 330. The first lens group G1 and the second lens group G2 may form the optical lens 210 shown in FIG. 2. The image sensor 330 may be the image sensor 220 shown in FIG. 2. The first lens group G1 has a positive focal power, and the second lens group G2 has a negative focal power.

When a focusing operation from the infinite-distance object to the short-distance object is performed, the second lens group G2 and the image sensor move together in a direction away from the first lens group G1. Optionally, a movement amount of the second lens group G2 may be the same as or different from a movement amount of the image sensor.

It should be understood that, as a spacing between the first lens group G1 and the second lens group G2 increases, the image shooting magnification ratio gradually increases. When the shot object is at the infinite distance, a value of the image shooting magnification ratio is extremely small. When the shot object is about 27 mm away from the camera module 300, the image shooting magnification ratio is 0.6.

It should be understood that, that the shot object is 27 mm away from the camera module means that a distance between the shot object and a first surface of a lens or a prism that is closest to an object side and that is of the camera module is 27 mm. In this example, 27 mm is a shortest focusing distance of the camera module 300. FIG. 3 shows an optical path of an incident light ray of the shot object, and an arrow indicates a light entrance direction of the incident light ray. As shown in FIG. 3, in the optical path of the incident light ray, a first reflection element 301, a first lens 311, a diaphragm 340, a second lens 312, a third lens 313, a fourth lens 314, a fifth lens 315, a sixth lens 316, an infrared filter 320, and the image sensor 330 are sequentially arranged.

The first lens group G1 may include a first lens unit U1, and the first lens unit U1 may include a plurality of lenses, for example, may include the first lens 311, the second lens 312, and the third lens 313. The first lens unit U1 has a positive focal power, and is configured to converge incident light rays and transmit a converged incident light ray to the second lens group G2.

Optionally, the first lens group G1 may further include the first reflection element 301. The first reflection element 301 is configured to receive the incident light ray and reflect the incident light ray to the first lens unit U1.

In some embodiments, the first reflection element 301 is a right-angle prism, and the first reflection element 301 may include two right-angle surfaces and one oblique surface. The oblique surface is a total reflection surface, and the incident light ray may be deflected on the oblique surface. In this example, a right-angle surface of an image side of the first reflection element 301 is disposed opposite to the first lens unit U1, and the other right-angle surface of the first reflection element 301 is disposed toward the shot object. That is, the first reflection element 301 is disposed on an object side of the first lens unit U1. In this way, when the incident light ray of the shot object enters the first reflection element 301, the incident light ray may be deflected by 90 degrees on the oblique surface, and the deflected incident light ray may reach the second lens group G2 through the first lens unit U1.

In some embodiments, the first reflection element 301 is a reflector. That is, the first reflection element 301 is of a non-lens structure, and the first reflection element 301 includes an oblique surface formed by the reflector.

In this embodiment of this application, due to existence of the first reflection element 301, if the first lens unit U1 of the first lens group G1 is moved to perform a focusing operation, focusing space needs to be reserved between the first lens unit U1 and the first reflection element 301. That is, the first reflection element 301 may limit a focusing stroke, which is not conducive to miniaturization of the camera module.

Optionally, the camera module 300 may further include the diaphragm 340. The diaphragm 340 may be disposed between the first reflection element 301 and the first lens 311, or the diaphragm 340 is disposed between the first lens group G1 and the second lens group G2, or the diaphragm is disposed before the first lens unit U1. This is not limited in this application.

For example, as shown in FIG. 3, the diaphragm 340 may be mounted on the first lens 311 of the first lens group G1. In this case, aperture adjustment effect of the diaphragm 340 is better, and imaging quality can be improved.

The diaphragm 340 may be of an isolated ring structure or a variable blade structure; or the diaphragm 340 may be implemented by using a surface spraying process, for example, an aperture diaphragm 340 is obtained by spraying a light shielding material on a lens. A position of the diaphragm 340 may be fixed or may be variable. For example, the position of the diaphragm 340 is variable, and the diaphragm 340 may be adjusted based on a focusing case, to be located between different lenses.

The second lens group G2 may include a second lens unit U2, and the second lens unit U2 may include a plurality of lenses, for example, may include the fourth lens 314, the fifth lens 315, and the sixth lens 316. The second lens unit U2 is located on an image side of the first lens unit U1, the second lens unit U2 has a negative focal power, and the second lens unit U2 may transmit, to the image sensor, the incident light ray converged by the first lens unit U1.

Optionally, the second lens group G2 may further include the infrared filter 320. The infrared filter 320 is disposed on an object side of the image sensor 330, that is, between the second lens unit U2 and the image sensor 330. The infrared filter 320 may be, for example, an infrared-cut filter. The infrared filter 320 may eliminate an unnecessary light ray projected onto the image sensor 330, and prevent the image sensor 330 from generating false colors or ripples, to effectively improve a resolution and color reproduction of the image sensor 330.

It should be noted that, in this example, a connection line between optical centers of lenses of the first lens unit U1 and the second lens unit U2 may coincide with a center line of the image sensor 330.

Optionally, a material of each lens of the camera module 300 may be a plastic material, or may be a glass material, or may be another material that can satisfy a lens performance requirement, for example, a composite material or a resin material.

In some embodiments, the camera module 300 may further include an automatic focusing drive assembly. The automatic focusing drive assembly may be configured to drive the second lens group G2 and the image sensor 330 to move in the direction away from the first lens group G1 or in a direction close to the first lens group G1.

In some embodiments, the automatic focusing drive assembly may include a first motor and a second motor. The first motor is configured to drive the second lens group G2 to move in the direction away from the first lens group G1 or in the direction close to the first lens group G1, and the second motor is configured to drive the image sensor 330 to move in the direction away from the first lens group G1 or in the direction close to the first lens group G1.

The following describes specific design parameters of lenses in the first lens group G1 and the second lens group G2.

For ease of description, in this example, S1 indicates a light entrance surface of the first reflection element 301, S2 indicates an oblique surface of the first reflection element 301, S3 indicates a light exit surface of the first reflection element 301, S4 indicates a light entrance surface of the first lens 311, STO indicates a surface of the diaphragm 340, S5 indicates a light exit surface of the first lens 311, S6 indicates a light entrance surface of the second lens 312, S7 indicates a light exit surface of the second lens 312, S8 indicates a light entrance surface of the third lens 313, S9 indicates a light exit surface of the third lens 313, S10 indicates a light entrance surface of the fourth lens 314, S11 indicates a light exit surface of the fourth lens 314, S12 indicates a light entrance surface of the fifth lens 315, S13 indicates a light exit surface of the fifth lens 315, S14 indicates a light entrance surface of the sixth lens 316, S15 indicates a light exit surface of the sixth lens 316, S16 indicates a light entrance surface of the infrared filter 320, S17 indicates a light exit surface of the infrared filter 320, and S18 indicates a surface of the image sensor 330. $\alpha i$ indicates an $i^{th}$-order aspheric coefficient, where i=4, 6, 8, 10, 12, 14, or 16.

Table 1 to Table 4 show design data of the camera optical lens 300 in Example 1.

As shown in Table 1, Table 1 shows basic parameters of the camera module 300 in this embodiment of this application.

**Table 1**

| Total effective focal length | 14.6 mm |
|---|---|
| Effective focal length of the first lens group | 8.6 mm |
| Focal length of the first lens | 6.8 mm |
| Focal length of the second lens | -9.8 mm |
| Focal length of the third lens | 15.7 mm |
| Effective focal length of the second lens group | -7.43 mm |
| Focal length of the fourth lens | -6.98 mm |
| Focal length of the fifth lens | 16.1 mm |
| Focal length of the sixth lens | -18.6 mm |
| F-number | 1.57 |
| FOV | 26° |

As shown in Table 2, Table 2 shows a curvature radius, a thickness, a material, a refractive index, and a dispersion coefficient (an Abbe number) of each component lens of the camera module 300 in this embodiment of this application.

**Table 2**

| Surface number | Description | Curvature radius | Thickness (mm) | Refractive index | Dispersion coefficient |
|---|---|---|---|---|---|
| S1 | First reflection element 301 | Unlimited | 3.9 | 1.74 | 28.2 |
| S2 | | Unlimited | -3.9 | | |
| S3 | | Unlimited | -2.6 | | |
| STO | Diaphragm 340 | Unlimited | 2.2 | - | - |
| S4 | First lens 311 | -4.97903 | -3.53774 | 1.545 | 56 |
| S5 | | 11.02436 | -0.30124 | | |
| S6 | Second lens 312 | -11.1633 | -0.5 | 1.66 | 20 |
| S7 | | -4.04147 | -1.0217 | | |
| S8 | Third lens 313 | -19.3695 | -0.89969 | 1.545 | 56 |
| S9 | | 15.20239 | D | | |

(continued)

| Surface number | Description | Curvature radius | Thickness (mm) | Refractive index | Dispersion coefficient |
|---|---|---|---|---|---|
| S10 | Fourth lens 314 | -17.113 | -0.65 | 1.545 | 56 |
| S11 | | -3.07824 | -2.13419 | | |
| S12 | Fifth lens 315 | 105.6605 | -0.95921 | 1.66 | 20 |
| S13 | | 9.766359 | -1.44674 | | |
| S14 | Sixth lens 316 | 6.02 | -1.06357 | 1.545 | 56 |
| S15 | | 1.57E+01 | -0.53387 | | |
| S16 | Infrared filter 320 | Unlimited | -0.21 | 1.523 | 54 |
| S17 | | Unlimited | -0.1 | | |
| S18 | Image sensor 330 | Unlimited | 0 | - | - |

A positive or negative curvature radius indicates that an optical surface is convex toward an object side or an image side, the positive curvature radius indicates that a position that is of the optical surface and that is near an optical axis is convex toward an object-side surface, and the negative curvature radius indicates that a position that is of the optical surface and that is near the optical axis is convex toward an image-side surface.

The thickness indicates an on-axis spacing between Si and Si+1, for example, an on-axis spacing between S9 and S10. A negative thickness indicates that the light ray is refracted once. The thickness of the diaphragm 340 is positive, which indicates that the diaphragm 340 is located on a right side of an on-axis vertex on the light entrance surface of the first lens 311.

At least one lens in each of the first lens group G1 and the second lens group G2 is configured to have a dispersion coefficient less than or equal to 40, and may be used to correct image chromatic aberration and improve the imaging quality. For example, dispersion coefficients of the second lens 312 in the first lens group G1 and the fifth lens 315 in the second lens group G2 are 20.

As shown in Table 3, Table 3 shows aspheric coefficients of the camera module 300 in this embodiment of this application.

**Table 3**

| Surface number | $\alpha4$ | $\alpha6$ | $\alpha8$ | $\alpha10$ | $\alpha12$ |
|---|---|---|---|---|---|
| S4 | 0.000156 | 8.56E-06 | 5.72E-07 | -7.1E-09 | 1.76E-09 |
| S5 | -0.00229 | 9.38E-05 | -4.1E-06 | 1.36E-07 | -2.9E-09 |
| S6 | 0.01017 | -0.00132 | 8.72E-05 | -3.6E-06 | 7.29E-08 |
| S7 | 0.011307 | -0.00132 | 8.67E-05 | -5.5E-06 | 8.89E-08 |
| S8 | -0.00335 | 0.000636 | -3.3E-05 | 2.73E-07 | - |
| S9 | -0.00183 | 0.000336 | -1.2E-05 | 1.99E-07 | - |
| S10 | 0.00264 | -0.00082 | 7.97E-05 | -3.1E-06 | - |
| S11 | 0.005194 | -0.0009 | 8.43E-05 | -5.1E-06 | - |
| S12 | 0.007514 | 0.001188 | -9.4E-05 | 2.37E-05 | - |
| S13 | 0.006787 | 0.000774 | -7.4E-05 | 9.4E-06 | -3.5E-08 |
| S14 | 0.0041 | -0.00046 | -1.8E-05 | 3.48E-06 | -1.1E-07 |
| S15 | 0.013905 | -0.00161 | 0.000128 | -4.9E-06 | 8.24E-08 |

It should be noted that, in this embodiment of this application, "E-i" indicates an exponential expression with a base 10, that is, "10-i". For example, "3.48E-06" indicates "3.48x10-6".

An aspheric surface of each lens of the camera module 300 satisfies:

$$z = \frac{cr^2}{1+\sqrt{1-(1+k)c^2r^2}} + \sum_{i=1}^{N}\alpha_i\rho^{2i}$$

Herein, z is a relative distance between a point that is on the aspheric surface and that is r away from an optical axis and a tangent plane tangent to an intersection point of the aspheric surface and the optical axis; r is a vertical distance between the point on the aspheric surface and the optical axis; c is a curvature at the optical axis on the aspheric surface; k is a cone coefficient; and $\alpha_i$ is the ith-order aspheric coefficient.

It should be understood that an aspheric surface shown in the foregoing aspheric formula may be used for the aspheric surface of each lens in the camera module 300, or another aspheric formula may be used. This is not limited in this application.

In Table 2, an on-axis spacing between S9 and S10 is indicated by a variable spacing D. The variable spacing D may indicate the spacing between the first lens group G1 and the second lens group G2. When the focusing operation from the infinite-distance object to the short-distance object is performed, the second lens group G2 and the image sensor may move in a direction away from the first reflection element 301. That is, the variable spacing D between the first lens group G1 and the second lens group G2 increases.

Table 4 describes variable spacings D that are between the first lens group G1 and the second lens group G2 and that exist when the shot object is at the infinite distance and the shot object is 27 mm away from the camera module. When the shot object is 27 mm away from the camera module, the variable spacing D between the first lens group G1 and the second lens group G2 is increased by 3 mm compared with the variable spacing D existing when the shot object is at the infinite distance, so that the image shooting magnification ratio of 0.6 can be implemented.

**Table 4**

| Position of the shot object | Infinite distance | 27 mm |
|---|---|---|
| D | -0.64206 | -3.64206 |

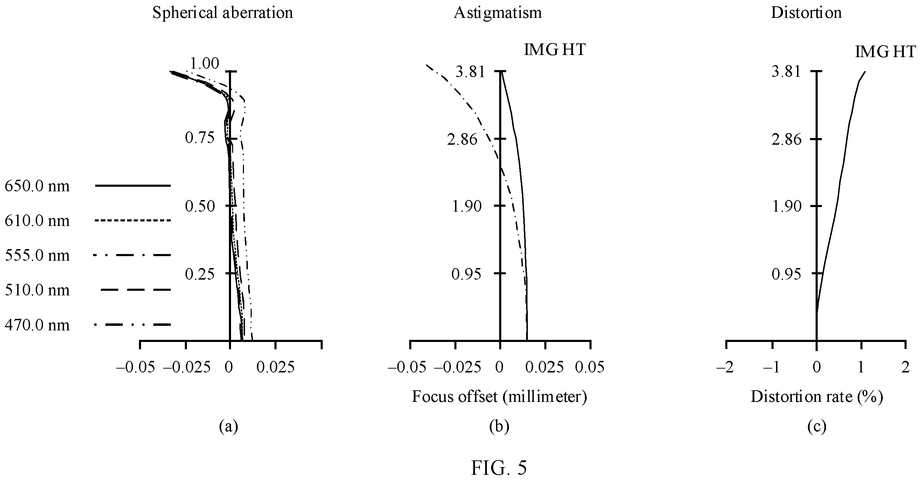

FIG. 4 is a diagram of various aberration that is of the camera module 300 and that is obtained when the shot object is at the infinite distance. FIG. 5 is a diagram of various aberration that is of the camera module 300 and that is obtained when the shot object is 27 mm away from the camera module. (a) in FIG. 4 and (a) in FIG. 5 are spherical aberration curve graphs, in a unit of mm; (b) in FIG. 4 and (b) in FIG. 5 are astigmatism of field curve graphs (curvature of field diagrams), in a unit of mm; and (c) in FIG. 4 and (c) in FIG. 5 are distortion curve graphs, in a unit of %. In the astigmatism of field curve graph and the distortion curve graph, a y-axis indicates an image height in millimeters.

The spherical difference diagram includes spherical aberration curves corresponding to different bands (including 650 nm, 610 nm, 555 nm, 510 nm, and 470 nm in the figure) of a system. A physical meaning of the spherical aberration curve is an offset that is relative to an ideal image point and that is obtained after light of a corresponding wavelength emitted in a 0-degree field of view passes through the optical system. A horizontal coordinate of the spherical aberration curve graph indicates a focus offset, and a vertical coordinate indicates a normalized field of view. Focus offsets of different fields of view in spherical aberration curve graphs shown in FIG. 4 and FIG. 5 are small, which indicates that on-axis aberration (spherical aberration, chromatic aberration, and the like) of the camera module 300 in this embodiment is well corrected, the spherical aberration is small, and the imaging quality is good.

The astigmatism curve graph is used to show offsets between convergence points of narrow light beams in different fields of view and an ideal imaging plane. S is a light beam in a sagittal direction, and T is a light beam in a meridian direction. A horizontal coordinate of the curve graph is an offset value in an optical axis direction, and a vertical coordinate of the curve graph is a corresponding field of view. When a value of a field of view is excessively large, image quality of the field of view is poor or high-order aberration exists. Curvature of field in both directions shown in FIG. 4 and FIG. 5 are small, and the system has a good focal depth. This indicates that the camera module in this embodiment has small astigmatism and good imaging quality.

The distortion curve graph indicates relative offsets between convergence points (actual image heights) of light beams in different fields of view and an ideal image height. Distortion rates of distortion curves shown in FIG. 4 and FIG. 5 are small, so that it can be ensured that there is no obvious distortion in an image and the imaging quality is good.

It can be learned from FIG. 4 and FIG. 5 that the camera module 300 can well correct various aberration from shooting the infinite-distance object to shooting the object 27 mm away from the camera module, and has a good imaging feature.

Example 2

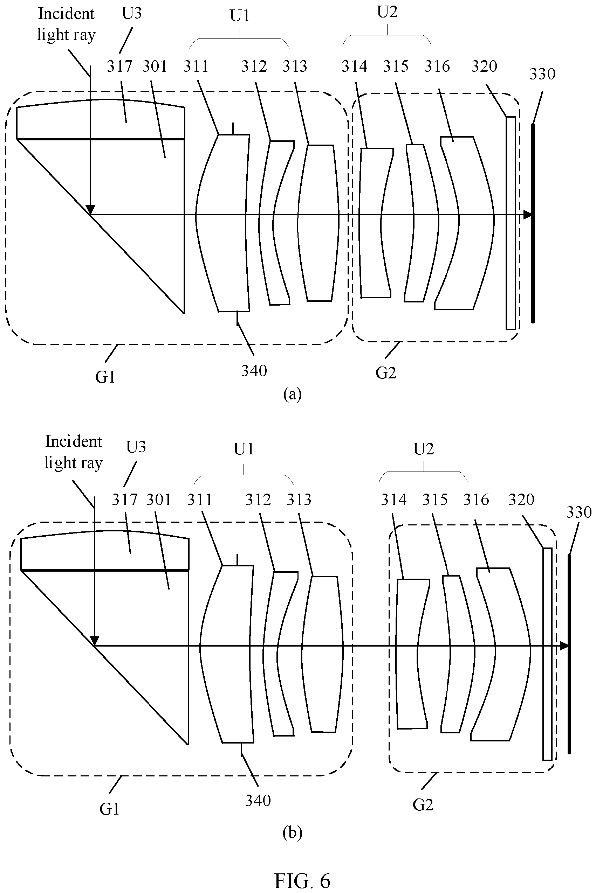

FIG. 6 is a diagram of a structure of a camera module 300 in Example 2. The camera module 300 in Example 2 may be a diagram of a structure of the camera optical lens 210 and the image sensor 220 in the camera module 200 in FIG. 2.

(a) in FIG. 6 is a diagram of a structure of the camera module 300 existing when a shot object is at an infinite distance.
(b) in FIG. 6 is a diagram of a structure of the camera module 300 existing when a shot object is 14 mm away from the camera module and an image shooting magnification ratio is 1.

It should be understood that, as a spacing between a first lens group G1 and a second lens group G2 increases, the image shooting magnification ratio gradually increases. When the shot object is at the infinite distance, a value of the image shooting magnification ratio is extremely small. When the shot object is about 14 mm away from the camera module 300, the image shooting magnification ratio is 1.

This example is similar to the foregoing example. For details, refer to the descriptions of the foregoing example. The following mainly describes a difference from the foregoing example.

As shown in FIG. 6, in an optical path of an incident light ray, a seventh lens 317, a first reflection element 301, a first lens 311, a diaphragm 340, a second lens 312, a third lens 313, a fourth lens 314, a fifth lens 315, a sixth lens 316, an infrared filter 320, and an image sensor 330 are sequentially arranged.

In this example, the first lens group G1 may include a first lens unit U1 that includes the first lens 311, the second lens 312, and the third lens 313. The second lens group G2 may include a second lens unit U2 that includes the fourth lens 314, the fifth lens 315, and the sixth lens 316. The second lens unit U2 is disposed on an image side of the first lens unit U1. The first lens unit U1 has a positive focal power, and the second lens unit U2 has a negative focal power.

It should be noted that, in this example, a connection line between optical centers of lenses of the first lens unit U1 and the second lens unit U2 may coincide with a center line of the image sensor 330.

The first lens group G1 may further include the first reflection element 301. The first reflection element 301 is disposed on an object side of the first lens unit U1, and the first reflection element 301 is configured to receive the incident light ray and reflect the incident light ray to the first lens unit U1.

In this example, the first lens group G1 may further include a third lens unit U3, and the third lens unit U3 may be disposed on an object side of the first reflection element 301. The third lens unit U3 may include the seventh lens 317, where one surface of the seventh lens 317 may be attached to a right-angle surface of the object side of the first reflection element 301.

The third lens unit U3 has a positive focal power, and is configured to receive and converge incident light rays. The incident light rays are converged by the third lens unit U3 and then reflected at the first reflection element, and then are imaged on the image sensor through the first lens unit U1 and the second lens group G2.

It should be noted that when the first lens group G1 has a positive focal power, a lens in the first lens group G1 may have a negative focal power.

In some embodiments, in addition to the seventh lens 317, the third lens unit U3 may further include another lens.

In some embodiments, the seventh lens 317 and the first reflection element 301 may be integrally formed, or may be of a separate structure. When the seventh lens 317 and the first reflection element 301 are of the separate structure, the seventh lens 317 and the first reflection element 301 may be fastened in a manner of clamping, bonding, or the like.

In this embodiment of this application, the third lens unit U3 is disposed on the object side of the first reflection element 301, which helps increase an amount of light entering the first reflection element 301 and increase a length of an effective optical path, thereby reducing a size of the camera module and improving imaging quality.

Optionally, the first lens group G1 may further include the diaphragm 340, and the diaphragm 340 may be mounted on the first lens 311 of the first lens group G1.

Optionally, the second lens group G2 may further include the infrared filter 320, and the infrared filter 320 is disposed on an object side of the image sensor 330.

Optionally, at least one lens in each of the first lens unit U1 and/or the second lens unit U2 is configured to have a dispersion coefficient less than or equal to 40, and may be used to correct image chromatic aberration and improve the imaging quality.

The following describes specific design parameters of lenses in the first lens group G1 and the second lens group G2.

For ease of description, in Example 2, S1 indicates a light entrance surface of the seventh lens 317, S2 indicates a light entrance surface of the first reflection element 301 or a light exit surface of the seventh lens 317 (the light entrance surface of the first reflection element 301 and the light exit surface of the seventh lens 317 are attached together), S3 indicates an oblique surface of the first reflection element 301, S4 indicates a light exit surface of the first reflection element 301, S5 indicates a light entrance surface of the first lens 311, STO indicates a surface of the diaphragm 340, S6 indicates a light exit surface of the first lens 311, S7 indicates a light entrance surface of the second lens 312, S8 indicates a light exit surface of the second lens 312, S9 indicates a light entrance surface of the third lens 313, S10 indicates a light exit surface of the third lens 313, S11 indicates a light entrance surface of the fourth lens 314, S12 indicates a light exit surface of the fourth lens 314, S13 indicates a light entrance surface of the fifth lens 315, S14 indicates a light exit surface of the fifth lens 315, S15 indicates a light entrance surface of the sixth lens 316, S16 indicates a light exit surface of the sixth lens 316, S17 indicates a light entrance surface of the infrared filter 320, S18 indicates a light exit surface of the infrared filter 320, and S19 indicates a surface of the image sensor 330. $\alpha_i$ indicates an $i^{th}$-order aspheric coefficient, where i=4, 6, 8, 10, 12, 14, or 16.

Table 5 to Table 8 show design data of the camera optical lens 300 in Example 2.

As shown in Table 5, Table 5 shows basic parameters of the camera module 300 in Example 2.

**Table 5**

| | |
|---|---|
| Total effective focal length | 14.6 mm |
| Effective focal length of the first lens group | 7.7 mm |
| Focal length of the seventh lens | 41.5 mm |
| Focal length of the first lens | 12.85 mm |
| Focal length of the second lens | -11 mm |
| Focal length of the third lens | 6.68 mm |
| Effective focal length of the second lens group | -4.96 mm |
| Focal length of the fourth lens | -5.5 mm |
| Focal length of the fifth lens | 42.5 mm |
| Focal length of the sixth lens | -36 mm |
| F-number | 1.57 |
| FOV | 26° |

As shown in Table 6, Table 6 shows a curvature radius, a thickness, a refractive index, and a dispersion coefficient (an Abbe number) of each component lens of the camera module 300 in this embodiment of this application.

**Table 6**

| Surface number | Description | Curvature radius | Thickness (mm) | Refractive index | Dispersion coefficient |
|---|---|---|---|---|---|
| S1 | Seventh lens 317 | 1.92E+01 | 0.971050955 | 1.8 | 46.6 |
| S2 | First reflection element 301 | Unlimited | 3.9 | 1.74 | 28.2 |
| S3 | | Unlimited | -3.9 | | |
| S4 | | Unlimited | -1.39999996 | | |
| STO | Diaphragm 340 | Unlimited | 1 | - | - |
| S5 | First lens 311 | -7.48153942 | -1.27746817 | 1.545 | 56 |
| S6 | | 107.4787598 | -0.45792002 | | |
| S7 | Second lens 312 | -16.01585873 | -0.5 | 1.66 | 20 |
| S8 | | -4.97777114 | -0.70360711 | | |
| S9 | Third lens 313 | -8.014044431 | -1.70954431 | 1.545 | 56 |
| S10 | | 6.196888584 | D | | |
| S11 | Fourth lens 314 | 8.695227574 | -0.65 | 1.545 | 56 |
| S12 | | -4.745635549 | -0.79899135 | | |
| S13 | Fifth lens 315 | -20.82104066 | -2 | 1.66 | 20 |
| S14 | | -75.79358455 | -0.73258915 | | |

(continued)

| Surface number | Description | Curvature radius | Thickness (mm) | Refractive index | Dispersion coefficient |
|---|---|---|---|---|---|
| S15 | Sixth lens 316 | -3.84E+02 | -1.96987994 | 1.545 | 56 |
| S16 | | -1.87E+01 | -0.89 | | |
| S17 | Infrared filter 320 | Unlimited | -0.21 | 1.523 | 54 |
| S18 | | Unlimited | -0.1 | | |
| S19 | Image sensor 330 | Unlimited | 0 | - | - |

In Table 6, the thickness of the diaphragm 340 is positive, which indicates that the diaphragm 340 is located on a right side of an on-axis vertex on the light entrance surface of the first lens 311.

As shown in Table 7, Table 7 shows aspheric coefficients of the camera module 300 in Example 2 in this embodiment of this application.

**Table 7**

| Surface number | $\alpha 4$ | $\alpha 6$ | $\alpha 8$ | $\alpha 10$ | $\alpha 12$ | $\alpha 14$ |
|---|---|---|---|---|---|---|
| S5 | -0.00071 | -1.7E-05 | 1.83E-06 | -4E-07 | 1.96E-08 | - |
| S6 | -0.00121 | 0.000114 | -2.1E-05 | 1.57E-06 | -4.5E-08 | - |
| S7 | -0.00966 | 0.000652 | -5.7E-05 | 3.87E-06 | -1.6E-07 | - |
| S8 | -0.01065 | 0.000142 | 2.79E-05 | -1.5E-06 | - | - |
| S9 | -0.00171 | -0.00073 | 7.12E-05 | -2.1E-06 | - | - |
| S10 | -0.00024 | -0.00015 | 7.89E-06 | -1.4E-07 | - | - |
| S11 | 0.017011 | -0.00208 | 0.00018 | -7E-06 | - | - |
| S12 | 0.01223 | 0.000308 | -0.00019 | 3.66E-05 | - | - |
| S13 | -0.01101 | 0.001388 | -0.00018 | 1.15E-05 | - | - |
| S14 | -0.01298 | 0.002473 | -0.00034 | 3.43E-05 | -1.4E-06 | - |
| S15 | -0.01672 | 0.002798 | -0.00029 | 1.83E-05 | -4.7E-07 | - |
| S16 | -0.01342 | 0.001472 | -0.00019 | 1.36E-05 | -5E-07 | 6.48E-09 |

In Table 6, an on-axis spacing between S10 and S11 is indicated by a variable spacing D. The variable spacing D may indicate the spacing between the first lens group G1 and the second lens group G2. When a focusing operation from an infinite-distance object to a short-distance object is performed, the second lens group G2 and the image sensor 330 may move in a direction away from the first lens group G1. That is, the variable spacing D between the first lens group G1 and the second lens group G2 increases.

Table 8 describes variable spacings D that are between the first lens group G1 and the second lens group G2 and that exist when the shot object is at the infinite distance and the shot object is 14 mm away from the camera module. When the shot object is 14 mm away from the camera module, the variable spacing D between the first lens group and the second lens group is increased by 4 mm compared with the variable spacing D existing when the shot object is at the infinite distance, so that the image shooting magnification ratio of 1 can be implemented.

**Table 8**

| Position of the shot object | Infinite distance | 14 mm |
|---|---|---|
| D | -0.6 | -4.6 |

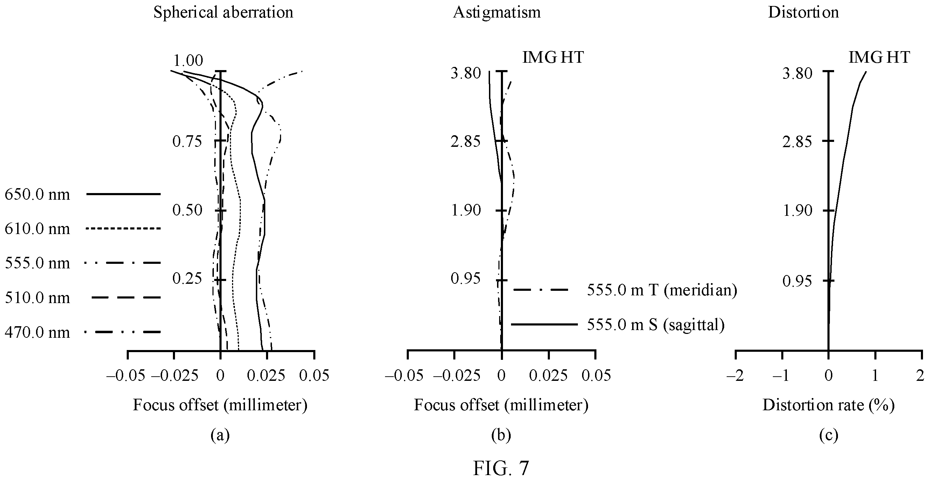

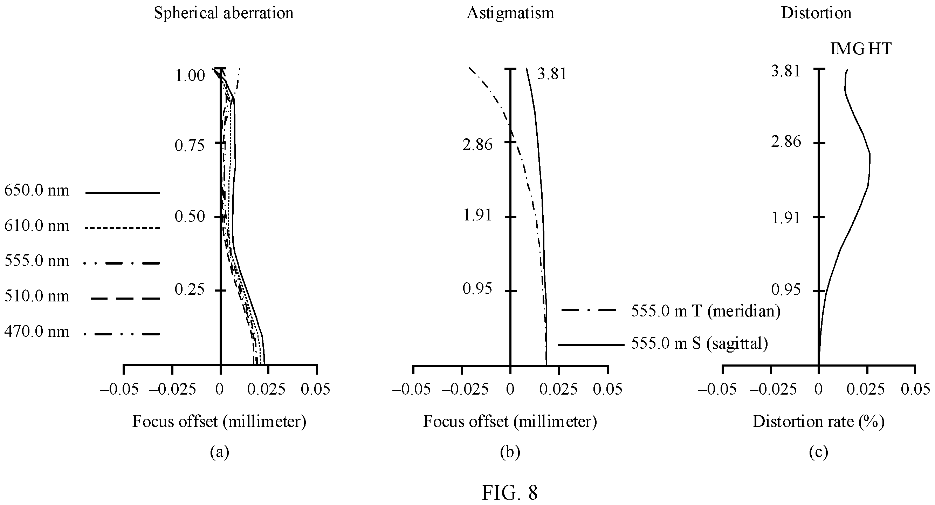

FIG. 7 is a diagram of various aberration that is of the camera module 300 and that is obtained when the shot object is at the infinite distance. FIG. 8 is a diagram of various aberration that is of the camera module 300 and that is obtained when the shot object is 14 mm away from the camera module. (a) in FIG. 7 and (a) in FIG. 8 are spherical aberration curve graphs, in a unit of mm; (b) in FIG. 7 and (b) in FIG. 8 are astigmatism of field curve graphs (curvature of field diagrams), in a unit of mm; and (c) in FIG. 7 and (a) in FIG. 8 are distortion curve graphs, in a unit of %. In the astigmatism of field curve graph and the distortion curve graph, a y-axis indicates an image height in millimeters.

The spherical difference diagram includes spherical aberration curves corresponding to different bands (including 650 nm, 610 nm, 555 nm, 510 nm, and 470 nm in the figure) of a system. A physical meaning of the spherical aberration curve is an offset that is relative to an ideal image point and that is obtained after light of a corresponding wavelength emitted in a 0-degree field of view passes through the optical system. A horizontal coordinate of the spherical aberration curve graph indicates a focus offset, and a vertical coordinate indicates a normalized field of view. Focus offsets of different fields of view in spherical aberration curve graphs shown in FIG. 7 and FIG. 8 are small, which indicates that on-axis aberration (spherical aberration, chromatic aberration, and the like) of the camera module 300 in this embodiment is well corrected, the spherical aberration is small, and the imaging quality is good.

The astigmatism curve graph is used to show offsets between convergence points of narrow light beams in different fields of view and an ideal imaging plane. S is a light beam in a sagittal direction, and T is a light beam in a meridian direction. A horizontal coordinate of the curve graph is an offset value in an optical axis direction, and a vertical coordinate of the curve graph is a corresponding field of view. When a value of a field of view is excessively large, image quality of the field of view is poor or high-order aberration exists. Curvature of field in both directions shown in FIG. 7 and FIG. 8 are small, and the system has a good focal depth. This indicates that the camera module in this embodiment has small astigmatism and good imaging quality.

The distortion curve graph indicates relative offsets between convergence points (actual image heights) of light beams in different fields of view and an ideal image height. Distortion rates of distortion curves shown in FIG. 7 and FIG. 8 are small, so that it can be ensured that there is no obvious distortion in an image and the imaging quality is good.

It can be learned from FIG. 7 and FIG. 8 that the camera module 300 can well correct various aberration from shooting the infinite-distance object to shooting the object 14 mm away from the camera module, and has a good imaging feature.

Example 3

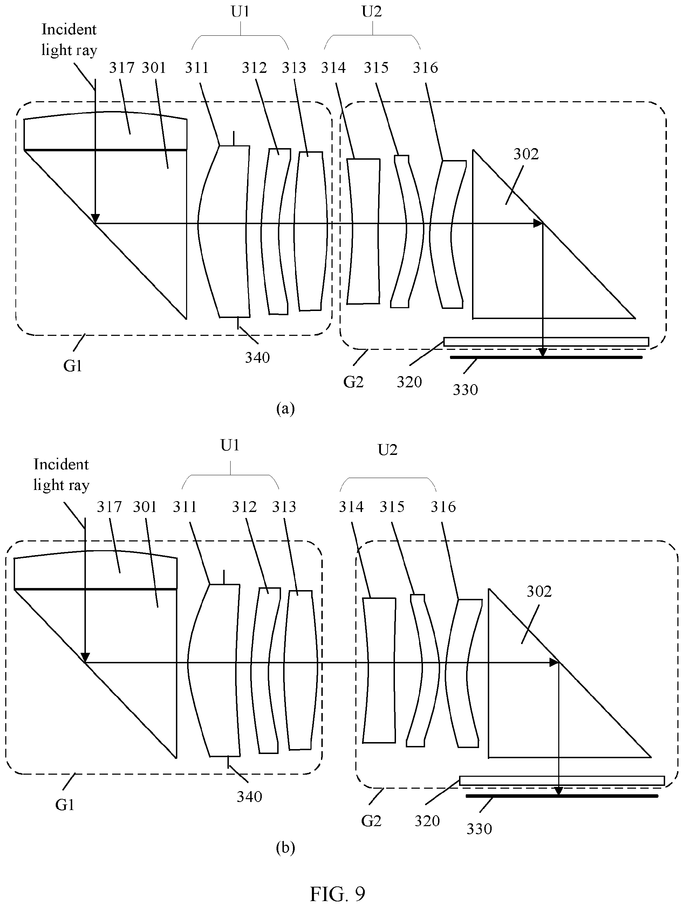

FIG. 9 is a diagram of a structure of a camera module 300 in Example 3. The camera module 300 in this example may be a diagram of a structure of the camera optical lens 210 and the image sensor 220 in the camera module 200 in FIG. 2.

(a) in FIG. 9 is a diagram of a structure of the camera module 300 existing when a shot object is at an infinite distance.
(b) in FIG. 9 is a diagram of a structure of the camera module 300 existing when a shot object is 32 mm away from the camera module and an image shooting ratio is 0.5.

It should be understood that, as a spacing between the first lens group G1 and the second lens group G2 increases, the image shooting magnification ratio gradually increases. When the shot object is at the infinite distance, a value of the image shooting magnification ratio is extremely small. When the shot object is about 32 mm away from the camera module 300, the image shooting magnification ratio is 0.5.

This example is similar to the foregoing example. For details, refer to the descriptions of the foregoing example. The following mainly describes a difference from the foregoing example.

As shown in FIG. 9, in an optical path of an incident light ray, a seventh lens 317, a first reflection element 301, a first lens 311, a diaphragm 340, a second lens 312, a third lens 313, a fourth lens 314, a fifth lens 315, a sixth lens 316, a second reflection element 302, an infrared filter 320, and an image sensor 330 are sequentially arranged.

In this example, the first lens group G1 may include a first lens unit U1 that includes the first lens 311, the second lens 312, and the third lens 313. The second lens group G2 includes a second lens unit U2 that includes the fourth lens 314, the fifth lens 315, and the sixth lens 316. The second lens unit U2 is disposed on an image side of the first lens unit U1. The first lens unit U1 has a positive focal power, and the second lens unit U2 has a negative focal power.

In this example, the second lens group G2 may further include the second reflection element 302. The second reflection element 302 is disposed on an image side of the second lens unit U2, and is configured to reflect the incident light ray to the image sensor 330.

In some embodiments, the second reflection element 302 is a right-angle prism, and the second reflection element 302 may include two right-angle surfaces and one oblique surface. The oblique surface is a total reflection surface, and the incident light ray may be deflected on the oblique surface. In this example, a right-angle surface of an image side of the second reflection element 302 is disposed opposite to the image sensor 330, and the other right-angle surface of the second reflection element 302 is disposed toward the second lens unit U2. That is, the second reflection element 302 is disposed on the image side of the second lens unit U2. In this way, when the incident light ray of the shot object enters the second reflection element 302, the incident light ray may be deflected by 90 degrees at the oblique surface, and the deflected incident light ray may reach the image sensor.

In some embodiments, the second reflection element 302 is a reflector. That is, the second reflection element 302 is of a non-lens structure, and the second reflection element 302 includes an oblique surface formed by the reflector.

Optionally, the first lens group G1 may further include the first reflection element 301. The first reflection element 301 is disposed on an object side of the first lens unit U1, and the first reflection element 301 is configured to receive the incident light ray and reflect the incident light ray to the first lens unit U1.

Because the first reflection element 301 and the second reflection element 302 are disposed, the image sensor 330 may be disposed in parallel to an object plane. When a size of the image sensor is large, a thickness of the electronic device may not be affected either. That is, the size of the image sensor is no longer limited by the thickness of the electronic device, so that a large image sensor may be disposed, thereby helping improve imaging quality.

Optionally, the first lens group G1 may further include the diaphragm 340, and the diaphragm 340 may be mounted on the seventh lens 317 of the first lens group G1.

Optionally, the second lens group G2 may further include the infrared filter 320, and the infrared filter 320 is disposed on an object side of the image sensor 330. For example, the infrared filter 320 may be disposed between the second reflection element 302 and the image sensor 330, or disposed between the second lens unit U2 and the second reflection element 302.

Optionally, at least one lens in each of the first lens unit U1 and/or the second lens unit U2 is configured to have a dispersion coefficient less than or equal to 40, and may be used to correct image chromatic aberration and improve the imaging quality.

The following describes specific design parameters of lenses in the first lens group G1 and the second lens group G2.

For ease of description, in the following example, S1 indicates a light entrance surface of the seventh lens 317, S2 indicates a light entrance surface of the first reflection element 301 or a light exit surface of the seventh lens 317 (the light entrance surface of the first reflection element 301 and the light exit surface of the seventh lens 317 are attached together), S3 indicates an oblique surface of the first reflection element 301, S4 indicates a light exit surface of the first reflection element 301, S5 indicates a light entrance surface of the first lens 311, STO indicates a surface of the diaphragm 340, S6 indicates a light exit surface of the first lens 311, S7 indicates a light entrance surface of the second lens 312, S8 indicates a light exit surface of the second lens 312, S9 indicates a light entrance surface of the third lens 313, S10 indicates a light exit surface of the third lens 313, S11 indicates a light entrance surface of the fourth lens 314, S12 indicates a light exit surface of the fourth lens 314, S13 indicates a light entrance surface of the fifth lens 315, S14 indicates a light exit surface of the fifth lens 315, S15 indicates a light entrance surface of the sixth lens 316, S16 indicates a light exit surface of the sixth lens 316, S17 indicates a light entrance surface of the second reflection element 302, S18 indicates an oblique surface of the second reflection element 302, S19 indicates a light exit surface of the second reflection element 302, S20 indicates a light entrance surface of the infrared filter 320, S21 indicates a light exit surface of the infrared filter 320, and S22 indicates a surface of the image sensor 330. $\alpha i$ indicates an $i^{th}$-order aspheric coefficient, where i=4, 6, 8, 10, 12, 14, or 16.

Table 9 to Table 12 show design data of the camera optical lens 300 in Example 3.

As shown in Table 9, Table 9 shows basic parameters of the camera module 300 in Example 3.

**Table 9**

| | |
|---|---|
| Total effective focal length | 14.6 mm |
| Focal length of the first lens group | 10.2 mm |
| Focal length of the seventh lens | 155.7 mm |
| Focal length of the first lens | 13.1 mm |
| Focal length of the second lens | -16.4 mm |
| Focal length of the third lens | 11 mm |
| Focal length of the second lens group | -15.4 mm |
| Focal length of the fourth lens | -17.6 mm |
| Focal length of the fifth lens | -35 mm |
| Focal length of the sixth lens | 41.2 mm |
| F-number | 1.28 |
| FOV | 26° |

As shown in Table 10, Table 10 shows a curvature radius, a thickness, a material, a refractive index, and a dispersion coefficient (an Abbe number) of each component lens of the camera module 300 in this embodiment of this application.

**Table 10**

| Surface number | Description | Curvature radius | Thickness (mm) | Refractive index | Dispersion coefficient |
|---|---|---|---|---|---|
| S1 | Seventh lens 317 | 7.20E+01 | 0.625932 | 1.8 | 46.6 |
| S2 | First reflection element 301 | Unlimited | 4.1 | 1.74 | 28.2 |
| S3 | | Unlimited | -4.1 | | |
| S4 | | Unlimited | -2.45 | | |
| STO | Diaphragm 340 | Unlimited | 1.85 | - | - |
| S5 | First lens 311 | -7.15125 | -2.5 | 1.545 | 56 |
| S6 | | -1469.76 | -0.63885 | | |
| S7 | Second lens 312 | -8.74372 | -1.14386 | 1.66 | 20 |
| S8 | | -4.59648 | -1.05699 | | |
| S9 | Third lens 313 | -9.71073 | -1.45865 | 1.545 | 56 |
| S10 | | 14.87167 | D | | |
| S11 | Fourth lens 314 | 4.403974 | -0.8 | 1.545 | 56 |
| S12 | | 8.660594 | -0.6572 | | |
| S13 | Fifth lens 315 | 3.497018 | -0.6 | 1.66 | 20 |
| S14 | | 4.39541 | -0.1 | | |
| S15 | Sixth lens 316 | -4.059335 | -1.31462 | 1.545 | 56 |
| S16 | | -4.385506 | -0.80131 | | |
| S17 | Second reflection element 302 | Unlimited | -2.7 | 1.74 | 28.2 |
| S18 | | Unlimited | 2.65 | 1.74 | 28.2 |
| S19 | | Unlimited | 0.4 | | |
| S20 | Infrared filter 320 | Unlimited | 0.21 | 1.523 | 54 |
| S21 | | Unlimited | 0.190001 | | |
| S22 | Image sensor 330 | Unlimited | 0 | - | - |

In Table 10, the thickness of the diaphragm 340 is positive, which indicates that the diaphragm 340 is located on a right side of an on-axis vertex on the light entrance surface of the first lens 311.

As shown in Table 11, Table 11 shows aspheric coefficients of the camera module 300 in Example 3 in this embodiment of this application.

**Table 11**

| Surface number | $\alpha4$ | $\alpha6$ | $\alpha8$ | $\alpha10$ | $\alpha12$ | $\alpha14$ |
|---|---|---|---|---|---|---|
| S5 | -0.00071 | -1.7E-05 | 1.83E-06 | -4E-07 | 1.96E-08 | - |
| S6 | -0.00121 | 0.000114 | -2.1E-05 | 1.57E-06 | -4.5E-08 | - |
| S7 | -0.00966 | 0.000652 | -5.7E-05 | 3.87E-06 | -1.6E-07 | - |
| S8 | -0.01065 | 0.000142 | 2.79E-05 | -1.5E-06 | - | - |
| S9 | -0.00171 | -0.00073 | 7.12E-05 | -2.1E-06 | - | - |
| S10 | -0.00024 | -0.00015 | 7.89E-06 | -1.4E-07 | - | - |
| S11 | 0.017011 | -0.00208 | 0.00018 | -7E-06 | - | - |
| S12 | 0.01223 | 0.000308 | -0.00019 | 3.66E-05 | - | - |

(continued)

| Surface number | $\alpha 4$ | $\alpha 6$ | $\alpha 8$ | $\alpha 10$ | $\alpha 12$ | $\alpha 14$ |
|---|---|---|---|---|---|---|
| S13 | -0.01101 | 0.001388 | -0.00018 | 1.15E-05 | - | - |
| S14 | -0.01298 | 0.002473 | -0.00034 | 3.43E-05 | -1.4E-06 | - |
| S15 | -0.01672 | 0.002798 | -0.00029 | 1.83E-05 | -4.7E-07 | - |
| S16 | -0.01342 | 0.001472 | -0.00019 | 1.36E-05 | -5E-07 | 6.48E-09 |

In Table 10, an on-axis spacing between S10 and S11 is indicated by a variable spacing D. The variable spacing D may indicate the spacing between the first lens group G1 and the second lens group G2. When a focusing operation from an infinite-distance object to a short-distance object is performed, the second lens group G2 and the image sensor 330 may move in a direction away from the first lens group G1. That is, the variable spacing D between the first lens group G1 and the second lens group G2 increases.

Table 12 describes variable spacings D that are between the first lens group G1 and the second lens group G2 and that exist when the shot object is at the infinite distance and the shot object is 32 mm away from the camera module. When the shot object is 32 mm away from the camera module, the variable spacing D between the first lens group G1 and the second lens group G2 is increased by 3.5 mm compared with the variable spacing D existing when the shot object is at the infinite distance, so that the image shooting magnification ratio of 0.5 can be implemented.

**Table 12**

| Position of the shot object | Infinite distance | 32 mm |
|---|---|---|
| D | -0.6 | -4.1 |

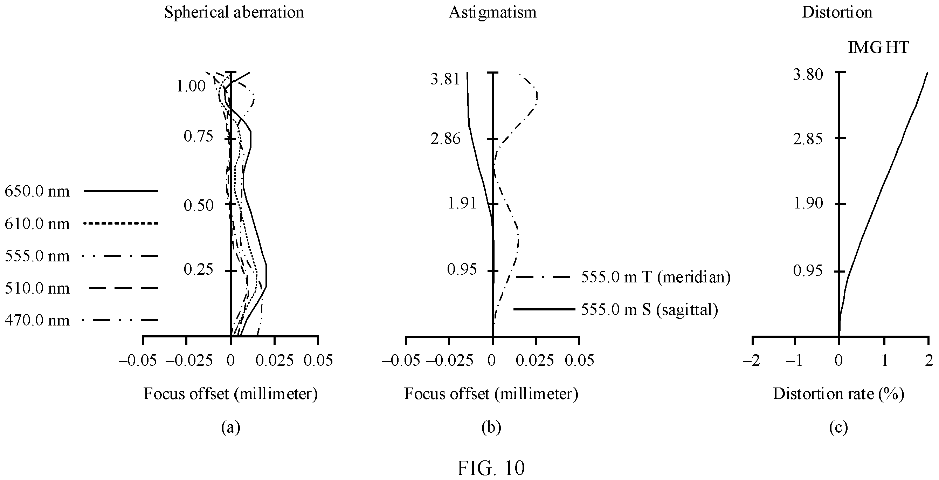

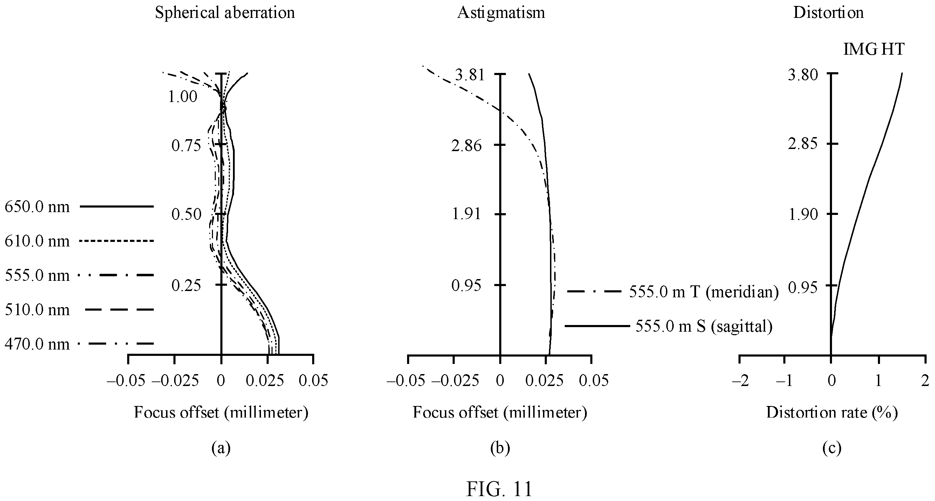

FIG. 10 is a diagram of various aberration that is of the camera module 300 and that is obtained when the shot object is at the infinite distance. FIG. 11 is a diagram of various aberration that is of the camera module 300 and that is obtained when the shot object is 32 mm away from the camera module. (a) in FIG. 10 and (a) in FIG. 11 are spherical aberration curve graphs, in a unit of mm; (b) in FIG. 10 and (b) in FIG. 11 are astigmatism of field curve graphs (curvature of field diagrams), in a unit of mm; and (c) in FIG. 10 and (a) in FIG. 11 are distortion curve graphs, in a unit of %. In the astigmatism of field curve graph and the distortion curve graph, a y-axis indicates an image height in millimeters.

The spherical difference diagram includes spherical aberration curves corresponding to different bands (including 650 nm, 610 nm, 555 nm, 510 nm, and 470 nm in the figure) of a system. A physical meaning of the spherical aberration curve is an offset that is relative to an ideal image point and that is obtained after light of a corresponding wavelength emitted in a 0-degree field of view passes through the optical system. A horizontal coordinate of the spherical aberration curve graph indicates a focus offset, and a vertical coordinate indicates a normalized field of view. Focus offsets of different fields of view in spherical aberration curve graphs shown in FIG. 10 and FIG. 11 are small, which indicates that on-axis aberration (spherical aberration, chromatic aberration, and the like) of the camera module 300 in this embodiment is well corrected, the spherical aberration is small, and the imaging quality is good.

The astigmatism curve graph is used to show offsets between convergence points of narrow light beams in different fields of view and an ideal imaging plane. S is a light beam in a sagittal direction, and T is a light beam in a meridian direction. A horizontal coordinate of the curve graph is an offset value in an optical axis direction, and a vertical coordinate of the curve graph is a corresponding field of view. When a value of a field of view is excessively large, image quality of the field of view is poor or high-order aberration exists. Curvature of field in both directions shown in FIG. 10 and FIG. 11 are small, and the system has a good focal depth. This indicates that the camera module in this embodiment has small astigmatism and good imaging quality.

The distortion curve graph indicates relative offsets between convergence points (actual image heights) of light beams in different fields of view and an ideal image height. Distortion rates of distortion curves shown in FIG. 10 and FIG. 11 are small, so that it can be ensured that there is no obvious distortion in an image and the imaging quality is good.

It can be learned from FIG. 10 and FIG. 11 that the camera module 300 can well correct various aberration from shooting the infinite-distance object to shooting the object 32 mm away from the camera module, and has a good imaging feature.

Example 4

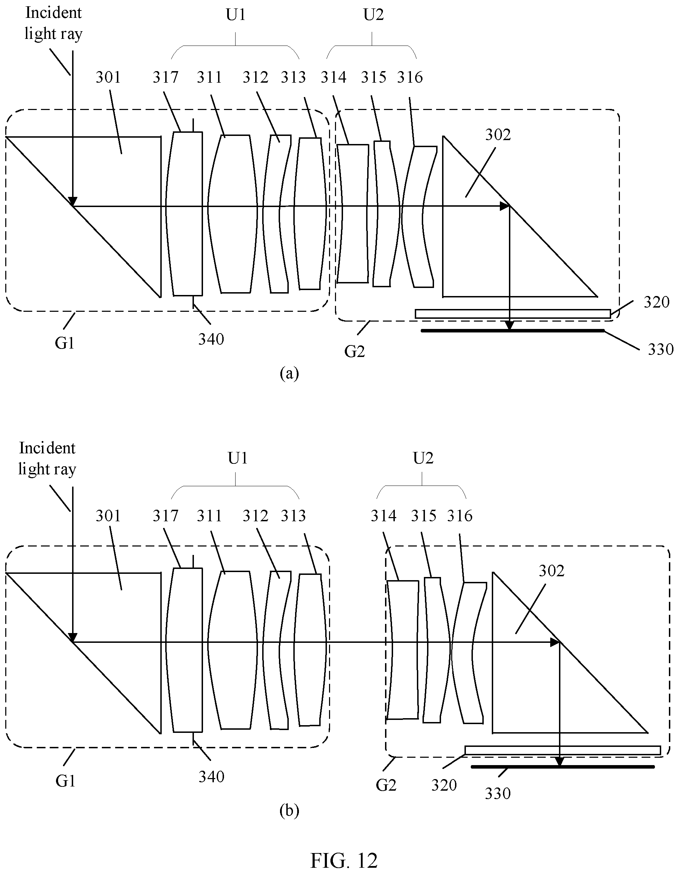

FIG. 12 is a diagram of a structure of a camera module 300 in Example 4. The camera module 300 in this example may be a diagram of a structure of the camera optical lens 210 and the image sensor 220 in the camera module 200 in FIG.

2.

(a) in FIG. 12 is a diagram of a structure of the camera module 300 existing when a shot object is at an infinite distance.

(b) in FIG. 12 is a diagram of a structure of the camera module 300 existing when a shot object is 27 mm away from the camera module and an image shooting ratio is 0.6.

It should be understood that, as a spacing between the first lens group G1 and the second lens group G2 increases, the image shooting magnification ratio gradually increases. When the shot object is at the infinite distance, a value of the image shooting magnification ratio is extremely small. When the shot object is about 27 mm away from the camera module 300, the image shooting magnification ratio is 0.6.

This example is similar to the foregoing example. For details, refer to the descriptions of the foregoing example. The following mainly describes a difference from the foregoing example.

As shown in FIG. 12, in an optical path of an incident light ray, a first reflection element 301, a seventh lens 317, a diaphragm 340, a first lens 311, a second lens 312, a third lens 313, a fourth lens 314, a fifth lens 315, a sixth lens 316, a second reflection element 302, an infrared filter 320, and an image sensor 330 are sequentially arranged.

In this example, the first lens group G1 may include a first lens unit U1 that includes the seventh lens 317, the first lens 311, the second lens 312, and the third lens 313. The second lens group G2 may include a second lens unit U2 that includes the fourth lens 314, the fifth lens 315, and the sixth lens 316. The second lens unit U2 is disposed on an image side of the first lens unit U1. The first lens unit U1 has a positive focal power, and the second lens unit U2 has a negative focal power.

Optionally, the first lens group G1 may further include the first reflection element 301. The first reflection element 301 is disposed on an object side of the first lens unit U1, and the first reflection element 301 is configured to receive the incident light ray and reflect the incident light ray to the first lens unit U1.

Optionally, the first lens group G1 may further include the diaphragm 340, and the diaphragm 340 may be mounted on the seventh lens 317 of the first lens group G1.

Optionally, the second lens group G2 may further include the second reflection element 302. The second reflection element 302 is disposed on an image side of the second lens unit U2, and is configured to reflect the incident light ray to the image sensor 330.

Optionally, the second lens group G2 may further include the infrared filter 320, and the infrared filter 320 is disposed on an object side of the image sensor 330. For example, the infrared filter 320 may be disposed between the second reflection element 302 and the image sensor 330, or disposed between the second lens unit U2 and the second reflection element 302.

Optionally, at least one lens in each of the first lens unit U1 and/or the second lens unit U2 is configured to have a dispersion coefficient less than or equal to 40, and may be used to correct image chromatic aberration and improve imaging quality.

The following describes specific design parameters of lenses in the first lens group G1 and the second lens group G2.

For ease of description, in the following example, S1 indicates a light entrance surface of the first reflection element 301, S2 indicates an oblique surface of the first reflection element 301, S3 indicates a light exit surface of the first reflection element 301, S4 indicates a light entrance surface of the seventh lens 317, STO indicates a surface of the diaphragm 340, S5 indicates a light exit surface of the seventh lens 317, S6 indicates a light entrance surface of the first lens 311, S7 indicates a light exit surface of the first lens 311, S8 indicates a light entrance surface of the second lens 312, S9 indicates a light exit surface of the second lens 312, S10 indicates a light entrance surface of the third lens 313, S11 indicates a light exit surface of the third lens 313, S12 indicates a light entrance surface of the fourth lens 314, S13 indicates a light exit surface of the fourth lens 314, S14 indicates a light entrance surface of the fifth lens 315, S15 indicates a light exit surface of the fifth lens 315, S16 indicates a light entrance surface of the sixth lens 316, S17 indicates a light exit surface of the sixth lens 316, S18 indicates a light entrance surface of the second reflection element 302, S19 indicates an oblique surface of the second reflection element 302, S20 indicates a light exit surface of the second reflection element 302, S21 indicates a light entrance surface of the infrared filter 320, S22 indicates a light exit surface of the infrared filter 320, and S23 indicates a surface of the image sensor 330. $\alpha i$ indicates an $i^{\text{th}}$-order aspheric coefficient, where i=4, 6, 8, 10, 12, 14, or 16.

Table 13 to Table 16 show design data of the camera optical lens 300 in Example 4.

As shown in Table 13, Table 13 shows basic parameters of the camera module 300 in Example 4.

**Table 13**

| | |
|---|---|
| Total effective focal length | 14.6 mm |
| Focal length of the first lens group | 17.1 mm |
| Focal length of the seventh lens | 17.58 mm |

(continued)

| Focal length of the first lens | 20.3 mm |
|---|---|
| Focal length of the second lens | -14.6 mm |
| Focal length of the third lens | 12 mm |
| Focal length of the second lens group | -10.5 mm |
| Focal length of the fourth lens | -11.8 mm |
| Focal length of the fifth lens | -73.4 mm |
| Focal length of the sixth lens | 120.2 mm |
| F-number | 1.28 |
| FOV | 26° |

As shown in Table 14, Table 14 shows a curvature radius, a thickness, a refractive index, and a dispersion coefficient (an Abbe number) of each component lens of the camera module 300 in this embodiment of this application.

**Table 14**

| Surface number | Description | Curvature radius | Thickness (mm) | Refractive index | Dispersion coefficient |
|---|---|---|---|---|---|
| S1 | First reflection element 301 | Unlimited | 4.1 | 1.74 | 28.2 |
| S2 | | Unlimited | -4.1 | | |
| S3 | | Unlimited | -2.73624 | | |
| STO | Diaphragm 340 | Unlimited | 2.136236 | - | - |
| S4 | Seventh lens 317 | -7.66389 | -2.25337 | 1.545 | 56 |
| S5 | | -33.9888 | -0.06 | | |
| S6 | First lens 311 | -10.8811 | -2.19972 | 1.545 | 20 |
| S7 | | -495.842 | -0.22319 | | |
| S8 | Second lens 312 | -8.68901 | -0.8 | 1.66 | 56 |
| S9 | | -4.41797 | -0.6312 | | |
| S10 | Third lens 313 | -9.15767 | -1.53255 | 1.545 | 56 |
| S11 | | 21.99179 | D | | |
| S12 | Fourth lens 314 | 4.789433 | -0.8 | 1.545 | 20 |
| S13 | | 19.75784 | -0.49352 | | |
| S14 | Fifth lens 315 | 1.03E+01 | -0.8 | 1.66 | 56 |
| S15 | | 1.35E+01 | -0.1 | | |
| S16 | Sixth lens 316 | -4.00 | -0.82597 | 1.545 | 56 |
| S17 | | -3.95 | -0.77003 | | |
| S18 | Second reflection element 302 | Unlimited | -2.7 | 1.74 | 28.2 |
| S19 | | Unlimited | 2.65 | | |
| S20 | | Unlimited | 0.4 | | |
| S21 | Infrared filter 320 | Unlimited | 0.21 | 1.523 | 54 |
| S22 | | Unlimited | 0.1 | | |
| S23 | Image sensor 330 | Unlimited | 0 | - | - |

In Table 14, the thickness of the diaphragm 340 is positive, which indicates that the diaphragm 340 is located on a right side of an on-axis vertex on the light entrance surface of the seventh lens 317.

As shown in Table 15, Table 15 shows aspheric coefficients of the camera module 300 in Example 4 in this embodiment of this application.

**Table 15**

| Surface number | $\alpha 4$ | $\alpha 6$ | $\alpha 8$ | $\alpha 10$ | $\alpha 12$ | $\alpha 14$ |
|---|---|---|---|---|---|---|
| S4 | 0.000103 | -5.4E-06 | -7E-08 | 5.42E-08 | -2.8E-09 | 4.93E-11 |
| S5 | -0.00011 | 2.61E-05 | -3.8E-07 | -5.8E-08 | 1.47E-09 | 7.7E-13 |
| S6 | -0.00012 | 8.45E-05 | -1.5E-06 | -1.2E-07 | 5.18E-09 | -5.2E-11 |
| S7 | -0.00063 | 0.000177 | -9.1E-06 | 2.3E-07 | -2.7E-09 | 1.16E-11 |
| S8 | 0.003273 | -0.00036 | 4.36E-05 | -2.7E-06 | 7.9E-08 | -9.7E-10 |
| S9 | 0.005411 | -0.00052 | 6.18E-05 | -2.6E-06 | 3.07E-08 | -9E-11 |
| S10 | 0.000324 | 0.000279 | -3.7E-05 | 2.5E-06 | -9.1E-08 | - |
| S11 | -0.00065 | 0.000293 | -4.9E-05 | 3.02E-06 | -9.3E-08 | - |
| S12 | -0.02546 | 0.003426 | -0.00033 | 1.82E-05 | -4.3E-07 | - |
| S13 | -0.02363 | 0.001048 | 0.00028 | -4.8E-05 | 1.96E-06 | - |
| S14 | -0.01003 | -0.00035 | 0.00029 | -4.1E-05 | 1.89E-06 | - |
| S15 | -0.00825 | -0.0004 | 0.000198 | -3.8E-05 | 2.39E-06 | - |
| S16 | 0.014695 | -0.00113 | 0.000156 | -1.9E-05 | 1.25E-06 | - |
| S17 | 0.018759 | -0.00145 | 0.000196 | -1.7E-05 | 8.47E-07 | - |

In Table 14, an on-axis spacing between S11 and S12 is indicated by a variable spacing D. The variable spacing D may indicate the spacing between the first lens group G1 and the second lens group G2. When a focusing operation from an infinite-distance object to a short-distance object is performed, the second lens group G2 and the image sensor 330 may move in a direction away from the object side. That is, the variable spacing D between the first lens group G1 and the second lens group G2 increases.

Table 12 describes variable spacings D that are between the first lens group and the second lens group and that exist when the shot object is at the infinite distance and the shot object is 27 mm away from the camera module. When the shot object is 27 mm away from the camera module, the variable spacing D between the first lens group and the second lens group is increased by 3.5 mm compared with the variable spacing D existing when the shot object is at the infinite distance, so that the image shooting magnification ratio of 0.6 can be implemented.

**Table 16**

| Position of the shot object | Infinite distance | 32 mm |
|---|---|---|
| D | -0.6 | -4.1 |

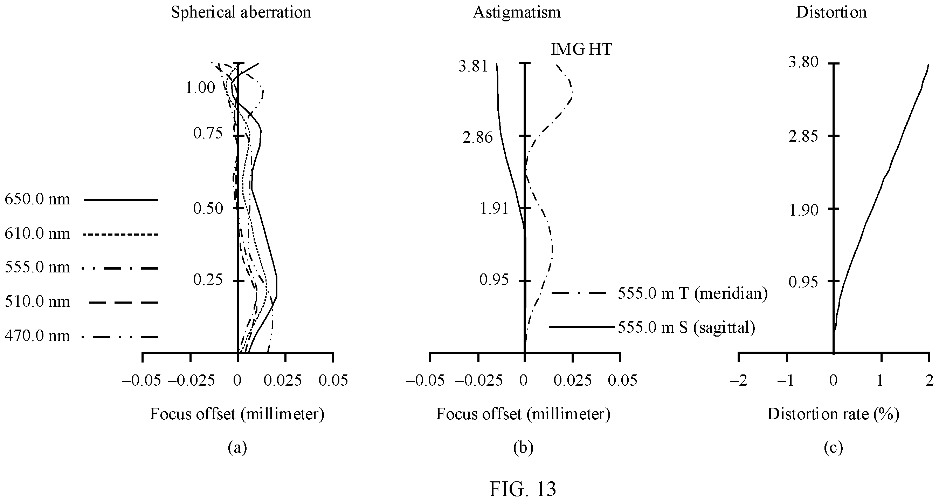

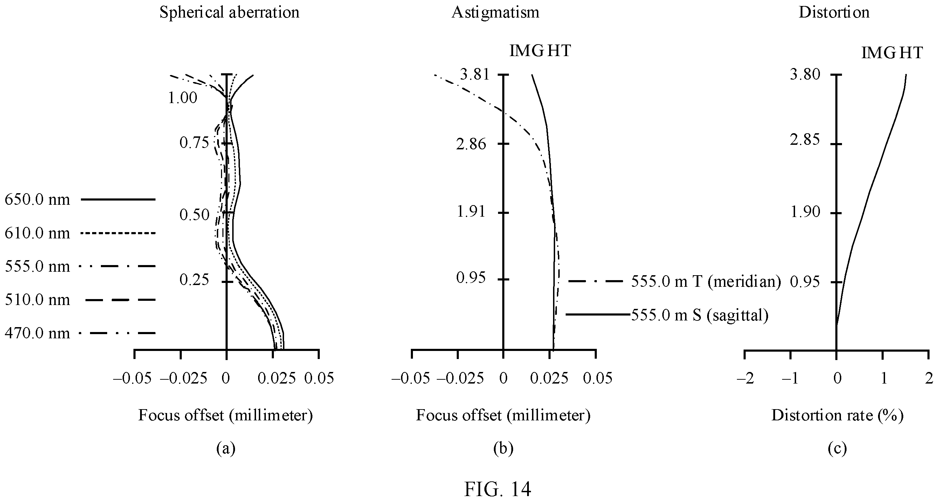

FIG. 13 is a diagram of various aberration that is of the camera module 300 and that is obtained when the shot object is at the infinite distance. FIG. 14 is a diagram of various aberration that is of the camera module 300 and that is obtained when the shot object is 27 mm away from the camera module. (a) in FIG. 13 and (a) in FIG. 14 are spherical aberration curve graphs, in a unit of mm; (b) in FIG. 13 and (b) in FIG. 14 are astigmatism of field curve graphs (curvature of field diagrams), in a unit of mm; and (c) in FIG. 13 and (a) in FIG. 14 are distortion curve graphs, in a unit of %. In the astigmatism of field curve graph and the distortion curve graph, a y-axis indicates an image height in millimeters.

The spherical difference diagram includes spherical aberration curves corresponding to different bands (including 650 nm, 610 nm, 555 nm, 510 nm, and 470 nm in the figure) of a system. A physical meaning of the spherical aberration curve is an offset that is relative to an ideal image point and that is obtained after light of a corresponding wavelength emitted in a 0-degree field of view passes through the optical system. A horizontal coordinate of the spherical aberration curve graph indicates a focus offset, and a vertical coordinate indicates a normalized field of view. Focus offsets of different fields of view in spherical aberration curve graphs shown in FIG. 13 and FIG. 14 are small, which indicates that on-axis aberration (spherical aberration, chromatic aberration, and the like) of the camera module 300 in this embodiment is well corrected, the spherical aberration is small, and the imaging quality is good.

The astigmatism curve graph is used to show offsets between convergence points of narrow light beams in different fields of view and an ideal imaging plane. S is a light beam in a sagittal direction, and T is a light beam in a meridian direction. A horizontal coordinate of the curve graph is an offset value in an optical axis direction, and a vertical coordinate of the curve graph is a corresponding field of view. When a value of a field of view is excessively large, image quality of the field of view is poor or high-order aberration exists. Curvature of field in both directions shown in FIG. 13 and FIG. 14 are small, and the system has a good focal depth. This indicates that the camera module in this embodiment has small astigmatism and good imaging quality.

The distortion curve graph indicates relative offsets between convergence points (actual image heights) of light beams in different fields of view and an ideal image height. Distortion rates of distortion curves shown in FIG. 13 and FIG. 14 are small, so that it can be ensured that there is no obvious distortion in an image and the imaging quality is good.

It can be learned from FIG. 13 and FIG. 14 that the camera module 300 can well correct various aberration from shooting the infinite-distance object to shooting the object 27 mm away from the camera module, and has a good imaging feature.

With reference to the foregoing example, when an effective focal length of the camera module is greater than or equal to 10 mm, and a field of view angle is less than or equal to 50°, in this embodiment of this application, it is easier to implement a large image shooting magnification ratio in a short motor stroke. In addition, imaging effect is better.

In addition, when an aperture of the camera module is less than or equal to 2.2, an amount of light entering the camera module is larger, which helps improve the imaging quality.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A camera module, wherein the camera module comprises:

   a first lens group, wherein the first lens group has a positive focal power;
   a second lens group, wherein the second lens group has a negative focal power; and
   an image sensor, wherein the image sensor is configured to convert an optical signal into an electrical signal, wherein
   the second lens group is located between the first lens group and the image sensor; and
   when the camera module performs a focusing operation from an object at a first position to an object at a second position, the second lens group and the image sensor move in a direction away from the first lens group, and the second position is located between the first position and the first lens group.

2. The camera module according to claim 1, wherein in the direction away from the first lens group, a movement amount of the second lens group is the same as a movement amount of the image sensor.

3. The camera module according to claim 1 or 2, wherein the camera module has a magnification ratio greater than or equal to 0.5 when shooting an object that is located at a closest focusing distance.

4. The camera module according to any one of claims 1 to 3, wherein the first lens group comprises a first reflection element and a first lens unit; and
   the first reflection element is located on an object side of the first lens unit, and the first reflection element is configured to reflect an incident light ray to the first lens unit.

5. The camera module according to claim 4, wherein the second lens group further comprises a second lens unit and a second reflection element, the second reflection element is located on an image side of the second lens unit, and the second reflection element is configured to reflect, to the image sensor, a light ray passing through the first lens unit and the second lens unit.

6. The camera module according to claim 4 or 5, wherein the first lens group further comprises a third lens unit, and the third lens unit has a positive focal power and is located on an object side of the first reflection element.

7. The camera module according to any one of claims 1 to 6, wherein the first lens group satisfies F1≤0.9Fs, F1 is an effective focal length of the first lens group, and Fs is an effective focal length of the camera module.

8. The camera module according to any one of claims 1 to 7, wherein the second lens group satisfies $-Fs \leq F2$, F2 is an effective focal length of the second lens group, and Fs is the effective focal length of the camera module.

9. The camera module according to any one of claims 1 to 8, wherein the effective focal length of the camera module is greater than or equal to 10 mm, and a field of view angle of the camera module is less than or equal to 50°.

10. The camera module according to any one of claims 1 to 9, wherein the first lens group and/or the second lens group comprise/comprises at least one lens whose dispersion coefficient is less than or equal to 40.

11. The camera module according to any one of claims 1 to 10, wherein an aperture of the camera module is less than or equal to 2.2.

12. The camera module according to any one of claims 1 to 11, wherein the second lens group further comprises an infrared filter, and the infrared filter is located on an object side of the image sensor.

13. The camera module according to any one of claims 1 to 12, wherein the camera module further comprises an automatic focusing drive assembly, and the automatic focusing drive assembly is configured to drive the second lens group and the image sensor to move in the direction away from the first lens group or in a direction close to the first lens group.

14. An electronic device, comprising a processor and the camera module according to any one of claims 1 to 13, wherein the camera module is configured to obtain image data and input the image data into the processor, so that the processor processes the image data.

100

110

FIG. 1

200

210

220

230

240

250

L

L

M1

Analog-
to-digital
converter

M2

M3

FIG. 2

FIG. 3

FIG. 4

EP 4 528 350 A1

Spherical aberration

Astigmatism

IMG HT

Distortion

IMG HT

650.0 nm

610.0 nm

555.0 nm

510.0 nm

470.0 nm

1.00

0.75

0.50

0.25

3.81

2.86

1.90

0.95

3.81

2.86

1.90

0.95

−0.05 −0.025  0  0.025

−0.05 −0.025  0  0.025  0.05

−2  −1  0  1  2

Focus offset (millimeter)

Distortion rate (%)

(a)

(b)

(c)

FIG. 5

Incident light ray U3 U1 U2
317 301 311 312 313 314 315 316 320 330
G1 340 G2
(a)

Incident light ray U3 U1 U2
317 301 311 312 313 314 315 316 320 330
G1 340 G2
(b)

FIG. 6

Spherical aberration

1.00
0.75
0.50
0.25

650.0 nm
610.0 nm
555.0 nm
510.0 nm
470.0 nm

−0.05 −0.025 0 0.025 0.05

Focus offset (millimeter)

(a)

Astigmatism

IMG HT

3.80
2.85
1.90
0.95

555.0 m T (meridian)
555.0 m S (sagittal)

−0.05 −0.025 0 0.025 0.05

Focus offset (millimeter)

(b)

Distortion

IMG HT

3.80
2.85
1.90
0.95

−2 −1 0 1 2

Distortion rate (%)

(c)

FIG. 7

EP 4 528 350 A1

EP 4 528 350 A1

Spherical aberration

Astigmatism

Distortion

IMG HT

650.0 nm ————
610.0 nm ------
555.0 nm ·· — · —
510.0 nm — — —
470.0 nm · — ·· —

—·—— 555.0 m T (meridian)

———— 555.0 m S (sagittal)

Focus offset (millimeter)

Focus offset (millimeter)

Distortion rate (%)

(a)

(b)

(c)

FIG. 8

(a)

(b)

FIG. 9

Spherical aberration

Astigmatism

Distortion

IMG HT

650.0 nm ——————

610.0 nm ··············

555.0 nm ·—··—··—

510.0 nm — — — —

470.0 nm ·—··—··—

1.00

0.75

0.50

0.25

−0.05 −0.025 0 0.025 0.05

Focus offset (millimeter)

(a)

3.81

2.86

1.91

0.95

555.0 m T (meridian)

555.0 m S (sagittal)

−0.05 −0.025 0 0.025 0.05

Focus offset (millimeter)

(b)

3.80

2.85

1.90

0.95

−2 −1 0 1 2

Distortion rate (%)

(c)

FIG. 10

Spherical aberration

1.00

0.75

0.50

0.25

650.0 nm ——————

610.0 nm ------------

555.0 nm · — · —

510.0 nm — — —

470.0 nm · — · · —

−0.05 −0.025  0  0.025  0.05

Focus offset (millimeter)

(a)

Astigmatism

3.81

2.86

1.91

0.95

555.0 m T (meridian)

555.0 m S (sagittal)

−0.05 −0.025  0  0.025  0.05

Focus offset (millimeter)

(b)

Distortion

IMG HT

3.80

2.85

1.90

0.95

−2  −1  0  1  2

Distortion rate (%)

(c)

FIG. 11

EP 4 528 350 A1

35

Incident
light ray

U1          U2

301    317  311  312  313    314  315  316

302

320

G1          340          G2          330

(a)

Incident
light ray

U1          U2

301    317  311  312  313    314  315  316

302

G1          340          G2    320    330

(b)

FIG. 12

FIG. 13

FIG. 14

**INTERNATIONAL SEARCH REPORT**

| | |
|---|---|
| International application No. | |
| | **PCT/CN2023/111766** |

**A. CLASSIFICATION OF SUBJECT MATTER**

G02B13/18(2006.01)i; G02B15/163(2006.01)i; G02B15/24(2006.01)i

According to International Patent Classification (IPC) or to both national classification and IPC

**B. FIELDS SEARCHED**

Minimum documentation searched (classification system followed by classification symbols)

IPC:G02B13/-、G02B15/-

Documentation searched other than minimum documentation to the extent that such documents are included in the fields searched

Electronic data base consulted during the international search (name of data base and, where practicable, search terms used)

CNTXT, ENTXTC, ENTXT, VEN, WPABS, DWPI: 华为, 王恒, 叶海水, 变焦, 聚焦, 对焦, 调焦, 电机 or 马达, 图像传感器 or 像面 or CCD or CMOS, 透镜组 s 移, 正 s (光焦度 or 折光力), 负 s (光焦度 or 屈折力), 无穷远, 近距离, 微距, 焦距, EFL, zoom+, focus+, lens group? s mov+ s distance, positive, nagative, lens group? s (stationary or immov+ or stand+ or still +), (sensor or CCD or CMOS) s mov+

**C. DOCUMENTS CONSIDERED TO BE RELEVANT**

| Category* | Citation of document, with indication, where appropriate, of the relevant passages | Relevant to claim No. |
|---|---|---|
| PX | CN 115561881 A (HUAWEI TECHNOLOGIES CO., LTD.) 03 January 2023 (2023-01-03) claims 1-14 | 1-14 |
| A | CN 102213823 A (CANON INC.) 12 October 2011 (2011-10-12) entire document | 1-14 |
| A | CN 106324813 A (SINTAI OPTICAL (SHENZHEN) CO., LTD. et al.) 11 January 2017 (2017-01-11) entire document | 1-14 |
| A | EP 3015897 A1 (KONICA MINOLTA INC.) 04 May 2016 (2016-05-04) entire document | 1-14 |
| A | JP 2009217167 A (SONY CORP.) 24 September 2009 (2009-09-24) entire document | 1-14 |
| A | US 2008130131 A1 (CANON K. K.) 05 June 2008 (2008-06-05) entire document | 1-14 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 October 2023** | **26 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 528 350 A1

| INTERNATIONAL SEARCH REPORT | International application No. |
|---|---|
| Information on patent family members | **PCT/CN2023/111766** |

| Patent document cited in search report | | | Publication date (day/month/year) | Patent family member(s) | | | Publication date (day/month/year) |
|---|---|---|---|---|---|---|---|
| CN | 115561881 | A | 03 January 2023 | None | | | |
| CN | 102213823 | A | 12 October 2011 | US | 2011249172 | A1 | 13 October 2011 |
| | | | | US | 8238037 | B2 | 07 August 2012 |
| | | | | JP | 2011221224 | A | 04 November 2011 |
| | | | | JP | 5676903 | B2 | 25 February 2015 |
| | | | | CN | 102213823 | B | 04 September 2013 |
| CN | 106324813 | A | 11 January 2017 | US | 2016377847 | A1 | 29 December 2016 |
| | | | | US | 9829688 | B2 | 28 November 2017 |
| | | | | CN | 106324813 | B | 05 March 2019 |
| EP | 3015897 | A1 | 04 May 2016 | JP | 2016090725 | A | 23 May 2016 |
| | | | | JP | 6481331 | B2 | 13 March 2019 |
| JP | 2009217167 | A | 24 September 2009 | None | | | |
| US | 2008130131 | A1 | 05 June 2008 | JP | 2008139757 | A | 19 June 2008 |
| | | | | JP | 4871712 | B2 | 08 February 2012 |
| | | | | US | 7463426 | B2 | 09 December 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211042870